# EUROPEAN PATENT SPECIFICATION

(11) **EP 4 026 375 B1**
(45) Date of publication and mention of the grant of the patent: **29.11.2023**
(21) Application number: 20757531.7
(22) Date of filing: 24.07.2020
(51) Int. Cl.: G01S 5/14, G01S 5/02, B62D 47/02

(54) **DETECTION OF A MOBILE PHONE USER IN AN ARTICULATED BUS**
ERKENNUNG EINES HANDYBENUTZERS IN EINEM GELENKBUS
DETECTION D'UN UTILISATEUR DE TERMINAL MOBILE AU SEIN D'UN BUS ARTICULÉ

(30) Priority: 24.07.2019 LU 101317
(43) Date of publication of application: 13.07.2022
(73) Proprietor: Alpha EC Industries 2018 S.à r.l., 1661 Luxembourg (LU)
(72) Inventor: HALLUNDBÆK, Jørgen, 1661 Luxembourg (LU)
(74) Representative: Wagner, Jean-Paul
(86) International application number: PCT/EP2020/070910
(87) International publication number: WO 2021/013974

(56) References cited:
- US-A1- 2013 273 938
- US-B1- 9 813 877
- KHOLKINE LEONID ET AL: "Detecting relative position of user devices and mobile access points", 2016 IEEE VEHICULAR NETWORKING CONFERENCE (VNC), IEEE, 8 December 2016 (2016-12-08), pages 1-8, XP033052811, DOI: 10.1109/VNC.2016.7835968

## Description

### Technical field

The invention lies in the field of user terminal detection in a vehicle. More precisely, the invention concerns user terminal positioning in an articulated vehicle. The invention provides a wearable mobile device detection process for an articulated bus. The invention also provides an articulated bus with a computer adapted for passenger detection through their user terminal.

### Background of the invention

Bus are adapted for detecting passengers therein. By way of illustration, optic means may be used for this specific purpose. However, this solution requires important calculation capacities, and fails to detect a passenger hidden by another passenger. Passenger detection becomes more difficult in buses with complex configurations such as in double deck buses.

Thus, there is room for reducing computation resources required for detecting one or several passengers in the passenger compartment of a bus. Improving the accuracy of the position assessment is also an aspect considered by the invention.

In addition, passenger detection system relying on wearable device detection may also provide false positives. For instance, it may consider that a person outside the articulated bus is inside the articulated bus if detection relies on smartphone detection. Thus, the corresponding bus may conclude it is full whereas it could accept additional passengers. A bus at a bus stop crowded with pedestrians having cellular phones may conclude it is full whereas it still has available places.

The document "KHOLKINE LEONID ET AL: "Detecting relative position of user devices and mobile access points", 2016 IEEE VEHICULAR NETWORKING CONFERENCE (VNC), IEEE, 8 December 2016, pages 1-8, XP033052811; discloses a method for determining if users are passengers of the bus or road users waiting outside the bus.

The document US 2013/273938 A1 provides a method for determination of wireless terminals positions.

### Technical problem to be solved

It is an objective of the invention to present a system, which overcomes at least some of the disadvantages of the prior art. In particular, it is an objective of the invention to improve presence detection.

### Summary of the invention

The invention is defined by the appended independent claims. Advantageous features are set out in the the appended dependent claims.

According to a first aspect of the invention, it is provided a process for detecting a user terminal in the passenger compartment of an articulated bus, the articulated bus comprising at least two units adapted for pivoting with respect to each other, said at least two units comprising a first unit and a second unit, a passenger compartment extending at least in the first unit and in the second unit, the process comprising the steps: obtaining position data of a user terminal, said user terminal being outside the first unit, computing inclination information of the second unit with respect to the first unit, computing the shape of the passenger compartment by using information which comprises the inclination information, assessing whether the user terminal is inside the passenger compartment, in the second unit, by using data which comprises the shape of the passenger compartment and the position data.

Preferably, the articulated bus comprises a network with a first access point, associated with a low power short range wireless protocol, the position data comprises a first distance between the first access point and the user terminal, said first distance being used during step assessing; the first access point notably being in the first unit.

Preferably, the network further comprises a second access point, the position data comprises a second distance between the second access point and the user terminal, the second access point being disposed in the first unit or in the second unit.

Preferably, the network further comprises a third access point, the position data comprises a third distance between the third access point and the user terminal, the third access point being disposed in the first unit.

Preferably, the access points are distributed in the at least two units, and the articulated bus is configured such that when the at least two units are aligned, the first, second and third access points define a polygon, or the access points are in the first unit and define a polygon.

Preferably, the network further comprises a fourth access point, the position data comprises a fourth distance between the fourth access point and the user terminal, the fourth access point being disposed in the first unit and define a polyhedral, or the access points are distributed in the units and the access points define a polyhedral when the at least two units are aligned.

Preferably, at step computing the inclination information, the inclination angle formed by the units and/or the position of a reference point of the second unit with respect to the first unit is computed. Preferably, at step computing the shape; for instance shape data; said shape comprises at least one of the following: the outline of the passenger compartment, the volume of the passenger compartment, and the longitudinal central line of at least one of the units.

Preferably, step obtaining the position data comprises a step access point scan in order to identify access points of a network, and a step power comparison of the access points in order to obtain the distances with respect to the access points, each access point of the network comprising a signature. Preferably, the articulated bus comprises a joint connecting the second unit to the first unit, the passenger compartment extending through said joint, at step assessing the user terminal notably being in said joint and/or an access point of the network is disposed in said joint.

Preferably, the process comprises a step geolocation of the articulated bus, a step obtaining orientation data of the articulated bus, notably of at least one of the two units; and step obtaining position data comprises a step geolocation of the user terminal, the position data comprising geolocation data which is used at step assessing.

Preferably, during the process the articulated bus is driving, and step computing inclination information comprises an inclination angle (α ; β) changing of at least: 5°, or 15°, or 30°, or 40°, notably in a first direction and in a second direction which is opposite to the first direction. Preferably, during the process the articulated bus drives, the position data and the inclination information change, at step assessing it is concluded that the user terminal is in the passenger compartment if the position data change is comprised in a predefined range.

Preferably, step assessing comprises a step comparison of the position data and the inclination information, at step assessing it is concluded that the user terminal is in the passenger compartment if the position data changes in accordance with the inclination information, notably during a threshold period.

Preferably, the articulated bus is a first articulated bus, at step obtaining position data a second articulated bus which is similar or identical to the first articulated bus and which comprises a sixth access point is at a different speed than the first articulated bus, the first articulated bus and the second articulated bus comprising a speed difference with a direction, during step assessing said direction being used in order to assess whether the user terminal is inside the passenger compartment.

Preferably, the position information is computed with respect to one of the units, notably with respect to the first unit.

Preferably, at least one, or at least two access points are at one or two longitudinal centres of the at least two units.

Preferably, the process comprises a step generating a detection data if the position data identifies a user terminal position within the computed shape of the passenger compartment.

Preferably, at step assessing, the detection data is generated if the user terminal is in the second unit or in a/the joint connecting the first unit to the second unit.

Preferably, the process further comprises the step storing the detection data on a memory element. Preferably, the articulated bus comprises a single access point in the first unit, the user terminal being outside the first unit.

Preferably, at step obtaining position data, the position data of the user terminal is a position data defined in relation with the first unit.

Preferably, at step computing the shape, the position of the second unit is computed based on information including the inclination information and with respect to the first unit.

Preferably, the direction is used during step obtaining the position data.

Preferably, the joint surrounds the passenger compartment.

Preferably, the passenger compartment comprises a first segment with a first known geometry and a second segment with a second known geometry in the first unit and in the second unit respectively.

Preferably, during step computing inclination information, the units are inclined with respect to each other in a top view and/or in projection on the ground.

Preferably, during step assessing, the speed of the articulated bus is above a threshold speed.

Preferably, before step assessing, the user terminal is connected to another wireless network.
each unit comprises a central axis, at step computing inclination information the central axes form an inclination angle of at least: 2°, or 5°, or 10°, or 20°, or 30°, or 38°, with respect to each other; said inclination angle notably being part of the inclination information.

Preferably, during step computing inclination information, the inclination angle ranges from 0° to +/-35°, preferably the inclination angle is of at least: 5° or 10°.

Preferably, the user terminal is an inboard user terminal, during step assessing, an outboard user terminal is outside the passenger compartment and along the articulated bus.

Preferably, the access points, notably at least two access points, are at opposite ends of the at least two units.

Preferably, the articulated bus comprises at least three units.

Preferably, the access points are longitudinally at distance from each other, for instance distributed along the articulated bus.

Preferably, at least three, or at least four access points are disposed on a longitudinal and vertical symmetry plane of the articulated bus, or of one of the units.

Preferably, the network comprises at least three access points which define the summits of a triangle when the units are aligned and/or the articulated bus drives in straight configuration.

Preferably, the or each user terminal comprises an identification number.

The or each user terminal runs an application adapted for sending data to the network of the Preferably, the bus or another network.

The user terminal is adapted for measuring the emission power of each access point of the network. Preferably, at step assessing, the articulated buses are parallel, or have different angles.

Preferably, at step assessing a road user with a terminal user is between the two articulated buses.

Preferably, step computing inclination information comprises computing an inclination angle formed by the at least two units, notably by their longitudinal central lines.

Preferably, if the user terminal moves at the same speed than the articulated bus, at step assessing it is concluded that the corresponding user terminal is in the passenger compartment.

Preferably, the network comprises a third access point, each unit receiving one of the three access points of the network.

Preferably, the articulated bus comprises an angle computation module adapted for measuring the inclination angle formed by the units, and notably for computing the shape of the passenger compartment, the detection module being adapted for assessing the presence of the user terminal depending of the inclination angle and/or of the shape.

Preferably, the first unit and the second units are linked to each other, and/or pivotably attached to each other.

Preferably, at step at step assessing, the units of the first articulated bus form a side recess, and the units of the second articulated bus form a side protrusion toward or within the side recess.

Preferably, the process may comprise a step update the shape of the passenger compartment.

Preferably, the process may comprise a step comparing the position data of each user terminal and the space covered by the shape, notably the updated shape, of the passenger compartment.

Preferably, the inclination information and the dimensions of the articulated form geometrical data which is used during step assessing.

Preferably, the polygon is inclined with respect to the vertical direction, preferably substantially horizontal.

It is another aspect of the invention to provide a user terminal detection process in the passenger compartment of for an articulated bus, the articulated bus comprising at least two units configured for pivoting with respect to each other, a passenger compartment extending in the at least two units, the user terminal detection process comprising the steps: estimating the position of the user terminal, obtaining an inclination angle formed by the units, assessing the position of the user terminal with respect to the passenger compartment in order to detect if the user terminal is in the articulated bus or in the articulated bus's environment.

It is another aspect of the invention to provide a computer program comprising computer readable code means, which when run on a computer, cause the computer to run the process according to the invention, preferably the articulated bus is a double deck bus.

It is another aspect of the invention to provide a computer program product including a computer readable medium on which the computer program according to the invention is stored.

It is another aspect of the invention to provide a computer configured for carrying out the process according to the invention.

It is another aspect of the invention to provide an articulated bus comprising a user terminal detection system with a computer in accordance with the invention; the articulated bus preferably comprising at least three units adapted for pivoting with respect to one another.

It is another aspect of the invention to provide a user terminal positioning method with respect to the passenger compartment of an articulated bus, the articulated bus comprising at least two units adapted for pivoting with respect to each other, said at least two units comprising a first unit and a second unit, a passenger compartment extending at least in the first unit and in the second unit, the user terminal positioning method comprising the steps: obtaining position data of the user terminal with respect to the environment or with respect to the articulated bus, said user terminal being outside the first unit, computing inclination information of the second unit with respect to the first unit, optionally obtaining position data of the articulated bus with respect to the environment, computing the shape of the passenger compartment by means of information including the inclination information, assessing whether the user terminal is inside the passenger compartment, in the second unit, by means of data comprising the shape of the passenger compartment and the position data.

It is another aspect of the invention to provide a computer program comprising computer readable code means, which when run on a computer, cause the computer to run the user terminal positioning method according to the invention.

It is another aspect of the invention to provide a process for detecting a user terminal in an articulated bus, the articulated bus comprising: at least two units adapted for pivoting with respect to each other, said at least two units comprising a first unit and a second unit; and a passenger platform extending at least along the first unit and in the second unit, the process comprising the steps: obtaining position data of a user terminal, said user terminal being outside the first unit, computing (inclination information of the second unit with respect to the first unit, computing the shape of the passenger platform with the inclination information, assessing whether the user terminal is on the passenger platform, in the second unit, by using the shape of the passenger platform and the position data.

It is another aspect of the invention to provide a Process for detecting a user terminal in an articulated bus, the articulated bus comprising: at least two units adapted for pivoting with respect to each other, said at least two units comprising a first unit and a second unit; and a bus structure forming the first unit and in the second unit, the process comprising the steps: obtaining position data of a user terminal, said user terminal being outside the first unit, computing inclination information of the second unit with respect to the first unit, computing the shape of the bus structure with the inclination information, assessing whether the user terminal is in the bus structure, notably in the second unit, by using the shape of the bus structure and the position data. It is another aspect of the invention to provide a process for detecting a user terminal in an articulated bus, the articulated bus comprising: at least two units adapted for pivoting with respect to each other, said at least two units comprising a first unit with first side walls, and a second unit with second side walls ; the process comprising the steps: obtaining position data of a user terminal, said user terminal being outside the first unit, computing inclination information of the second unit with respect to the first unit, notably of the first side walls with respect to the second side walls, computing the arrangement of the first side walls with respect to the second side walls with the inclination information, assessing whether the user terminal is between the first side walls or the first side walls, in the second unit, by using at least the arrangement of the first side walls with respect to the second side walls and the position data.

The different aspects of the invention may be combined to each other. In addition, the preferable features of each aspect of the invention may be combined with the other aspects of the invention, unless the contrary is explicitly mentioned.

### Technical advantages of the invention

Generally, the invention increases the detection ability of the articulated bus(es). It also allows simplification of the user terminal detection system.

The invention improves the accuracy of positioning of the passengers in the articulated bus. This result is achieved with limited computations resources. By the way computation may be partially carried out by the user terminals in order to save the computation resources of the articulated bus. The invention also allows to detect if a person is a passenger is in the articulated bus or outside the articulated bus. The invention also defines in which articulated bus a passenger stands when two similar two articulated are close to each other in an inclined configuration.

### Brief description of the drawings

Several embodiments of the present invention are illustrated by way of figures, which do not limit the scope of the invention, wherein
- figure 1 provides a schematic illustration of a side view of an articulated bus in accordance with a preferred embodiment of the invention;
- figure 2 provides a schematic illustration of a top view of an articulated bus in accordance with a preferred embodiment of the invention;
- figure 3 provides a schematic illustration of a top view of an articulated bus in accordance with a preferred embodiment of the invention;
- figure 4 provides a schematic illustration of a top view of an articulated bus in accordance with a preferred embodiment of the invention;
- figure 5 provides a schematic illustration of a top view of an articulated bus in accordance with a preferred embodiment of the invention;
- figure 6 provides a schematic illustration of a top view of two articulated bus in accordance with a preferred embodiment of the invention;
- figure 7 provides a schematic illustration of a top view of an articulated bus with three units in accordance with a preferred embodiment of the invention;
- figure 8 provides a schematic illustration of a top view of a triple unit articulated bus in accordance with a preferred embodiment of the invention;
- figure 9 provides a through cut of an articulated bus in accordance with a preferred embodiment of the invention;
- figure 10 provides a diagram block illustrating a process in accordance with a preferred embodiment of the invention;
- figure 11 provides a diagram block illustrating a process in accordance with a preferred embodiment of the invention;
- figure 12 provides a diagram block illustrating a process in accordance with a preferred embodiment of the invention.

### Detailed description of the invention

This section describes the invention in further detail based on preferred embodiments and on the figures. Similar reference numbers will be used to describe similar or the same concepts throughout different embodiments of the invention.

It should be noted that features described for a specific embodiment described herein may be combined with the features of other embodiments unless the contrary is explicitly mentioned. Features commonly known in the art will not be explicitly mentioned for the sake of focusing on the features that are specific to the invention. For example, the articulated bus in accordance with the invention is evidently powered by an electric supply, even though such supply is not explicitly referenced on the figures nor referenced in the description.

By convention, it may be defined that the word "longitudinal" refers to the longitudinal direction and may correspond to the main driving direction of the articulated bus. It may be along the main central axis of the articulated bus, and may be defined separately in relation with each unit. The word "transversal" refers to the transversal direction and may be perpendicular to the longitudinal direction. The words "rear" and "front" are in relation with the main or actual driving direction of the articulated bus.

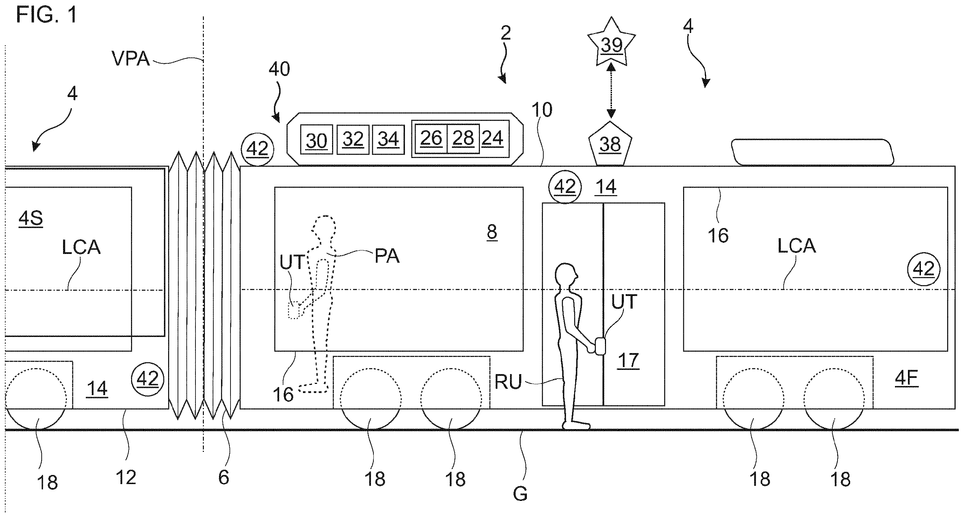

Figure 1 shows a vehicle for mass transportation in accordance with a preferred embodiment of the invention. The vehicle is an articulated bus 2 in the current embodiment of the invention; however, it may be another kind of articulated vehicle. The articulated bus 2 is stationary on the ground G, and may also drive on the ground G. The ground G forms a road and/or a bus stop. The ground G may be a flat surface. In reality, the ground G may be substantially inclined with respect to the horizontal direction. By way of illustration, roads generally have a side slope of 2-3%.

The articulated bus 2 is adapted for transportation of passengers in cities and may transport about one hundred passengers PA, for instance one hundred and twenty passengers PA. The articulated bus 2 may be an electric articulated bus. The articulated bus 2 may include electric driving engines. The articulated bus 2 may be purely electric, in the meaning that it is free of combustion engine. It may be a hybrid bus, combining electric engines and a combustion engine.

The articulated bus 2 may be an articulated bus. It may comprise a first unit 4F and a second unit 4S (partially represented), which may be a front unit and a rear unit respectively. Each unit 4, also designated as cart, may form a body in the meaning of a rigid structure. The units 4 may be similar or identical. Each unit 4 comprises a known geometry, and comprises a longitudinal central axis LCA.

These units 4 may be joined by a joint 6, for instance a hinged connection enabling the units 4 to swivel with respect to each other. The units 4 may pivot with respect to each other about a vertical pivot axis VPA. The joint 6 may be a loose joint allowing a transversal and/or a longitudinal offset between the units. During driving, the units 4 units may tilt transversally with respect to each other. In the current embodiment, only two units 4 are represented, however it is contemplated in the current invention that the articulated bus 2 includes three, four, or more units 4; which are articulated with respect to their neighbour units 4 by joints 6. Then, the passenger capacity may be of more than two hundred. Each unit 4 may be self-supporting. Thus, each unit 4 may move without the hinged connection 6.

The articulated bus 2 comprises a passenger compartment 8 for standing and/or seated passengers PA. The passenger compartment 8 extends substantially along the whole length of the articulated bus 2. The passenger compartment 8 extends substantially over the whole height and the whole width of the articulated bus 2. The passenger compartment 8 may extend along all the units 4 of the articulated bus 2. It may cross the joint 6. The joint 6 notably comprise an articulated platform and a bellow surrounding the passenger compartment 8.

The articulated bus 2 may include a roof 10, a passenger platform 12, and walls 14. The walls 14 may be outer walls. Two transversally opposite side walls 14 may go down from the roof 10 to the passenger platform 12. The joint 6, the roof 10, the passenger platform 12 and wall 14 form the structure of the articulated bus 2, and notably of each unit 4. As an option, they may comprise material allowing or reducing a wave passage, notably an electromagnetic wave passage. Since the bus is an articulated bus, the platform 12 is an articulated platform. The structure may be an articulated structure.

The side walls 14 may receive windows 16 and doors 17 for passengers PA. As an option, the windows may be covered by an electric device (not represented) such as a luminous display. Thus, the windows may reduce the electromagnetic wave passage.

The articulated bus 2 may be a low floor bus, with a passenger floor with a height of at most: 50 cm, or 40 cm. In the current embodiment, the articulated bus 2 comprise a single deck. Yet the articulated bus 2 may be a double deck articulated bus wherein at least one or each of the units comprises two passenger floors above one another. In particular, a double deck articulated bus counts six passenger floors, and six passenger platforms.

Each unit 4 may include several wheels 18 engaging the ground G. The axles and thus the wheels 18 may be distributed along the length of the articulated bus 2. The passenger compartment 8 extends along all the wheels 18 of the articulated bus 2. At least one pair of wheels is formed of steered wheels. Optionally, each wheel 18 of the articulated bus 2 or of at least one unit 4 are steered wheels and/or driving wheels.

The articulated bus 2 may comprise a computer 24, notably an inboard computer. The computer 24 may comprise a computer readable medium 26 and a processing unit 28. The computer readable medium 26 may store a source code for carrying out a process for detecting a user terminal UT in the passenger compartment 8, notably in accordance with the invention.

The articulated bus 2 comprises a user terminal detection system 30. The detection system 30 is adapted for detecting user terminal UT which are inside the articulated bus 2, notably in the passenger compartment 8. In particular, the detection system 30 is adapted for distinguishing the user terminals UT which are inside the passenger compartment 8 which are inboard from those which are outside. When the user terminals UT are borne by pedestrian, it permits to differentiate the pedestrians which are passengers PA or road users RU in the environment of the articulated bus 2. Thereby, the detection system 30 allows to count, or at least to estimate the number of passengers PA in the articulated bus 2, and notably in each unit 4. Accordingly, the articulated bus 2 may adapt the driving torque on each wheel 18, and may adapt the stiffness of each suspension device coupled to the wheels 18. It is also possible to estimate the battery life of the articulated bus 2, and to estimate the distance that may still be travelled.

The or each user terminal UT runs an application and/or communicates with the articulated bus 2. The entrance to the articulated bus 2 may be conditioned by having a user terminal UT in communication with the articulated bus, and notably running said application. A physical hurdle may block access to the passenger compartment 8 to those who do not have a required application running on a user terminal UT, and communicating with the articulated bus 2.

The user terminals UT may comprise a geolocation device (not represented). A geolocation device is well known from the skilled in the art and will not be describe further. The geolocation device provides geolocation data, and more generally position data of the user terminals UT. This user geolocation data is defined in relation with a point of earth, in the environment of the articulated bus 2.

The articulated bus 2 comprises a geolocation device 32 which provides geolocation data of said articulated bus 2. This bus geolocation data is advantageously defined in relation with the same fixed point which is used in relation with the user geolocation data. This bus geolocation data provides the position and preferably the orientation of one of the units 4 of the articulated bus 2. For instance, it provides the position and the orientation of the first unit 4. Thereby, it is possible to define the position of each user terminal UT with respect to the first unit 4. If the user terminal UT is in the first unit 4, it is considered that it is in the passenger compartment 8. If not, further tests and calculations are required.

The articulated bus 4 may comprise a module or means (not represented) for measuring the inclination between the units 4. The module provides the angle formed by the units. The angle is an angle obtained in projection on the ground G or on a horizontal plane which may be theorical in order to simplify computing. The module provides the orientation difference between the units 4. The module provides inclination information to the articulated bus 2, notably to the detection system 30. The module may be an inclination measuring module 34. The inclination measuring module 34 may communicate with the computer 24.

The inclination between the units 4 is used by the terminal detection system 30, for instance by the computer 24. The inclination information is used to estimate the shape of the passenger compartment 8. Then, the place covered by the passenger compartment 8 is defined. On this basis, it may be deduced what is inside the bus, and what is outside. Geometrical computation, is used for this purpose.

The articulated bus 2 stops regularly for boarding and passenger leave. In the current illustration, two persons are represented, namely a passenger PA inboard and a road user RU outboard. When the passenger PA leaves the passenger compartment 8, he becomes a road users RU and vice versa. The road user RU may walk close to the articulated bus 2, or may be stationary. He may wait for the articulated bus 2 at a bus stop.

By means, at least, of the position data of the user terminals UT, it is possible to define the position of said user terminals UT with respect to the articulated bus 2, and more precisely with respect to the passenger compartment 8. Computation permits to assess whether the user terminal UT is inside the passenger compartment 8 or not, and to determine whether the corresponding proprietor is inside the articulated bus 2.

The terminal detection system 30 is further adapted for calculating the position of the user terminal UT inside the passenger comportment 8. It is also configured for detecting several user terminals UT simultaneously, and for computing each of their respective positions. Consequently, the terminal detection system 30 provides a map with the passenger distribution. Then, the articulated bus 2 adapts the suspension stiffness, the braking efforts, and the drive torque on each wheel 18. Thereby the safety, the comfort and the efficiency are improved.

Communication means 38 may be used in order to obtain data from outer system(s) 39 providing information on the environment of the articulated bus 2. Communication may be achieved through WI-FI or 5G telecommunication standards. Other communication standards are considered by the invention. The communication means 38 may operate with the computer 24.

As an option, the articulated bus 2 comprises a network 40 communicating with at least one user terminal UT. The network may be associated with a low power short range wireless protocol. The short range may be interpreted as having a range of at most 20m, or 10m, or 5m. The network 40 comprises at least one access point 42, for instance several access points 42. The access points 42 are distributed along the length of the articulated bus 2, and may be disposed on the two units 4. They may be disposed at different height of the articulated bus 2. At least one or each access point 42 is disposed in the passenger compartment 8. As an option, one of the access points 42 is disposed outside the passenger compartment 8, for instance on the roof 10.

The access points 42, and notably their respective signatures and distances with respect to the user terminals UT, are used in order to provide position data; in addition or as an alternative to user geolocation data.

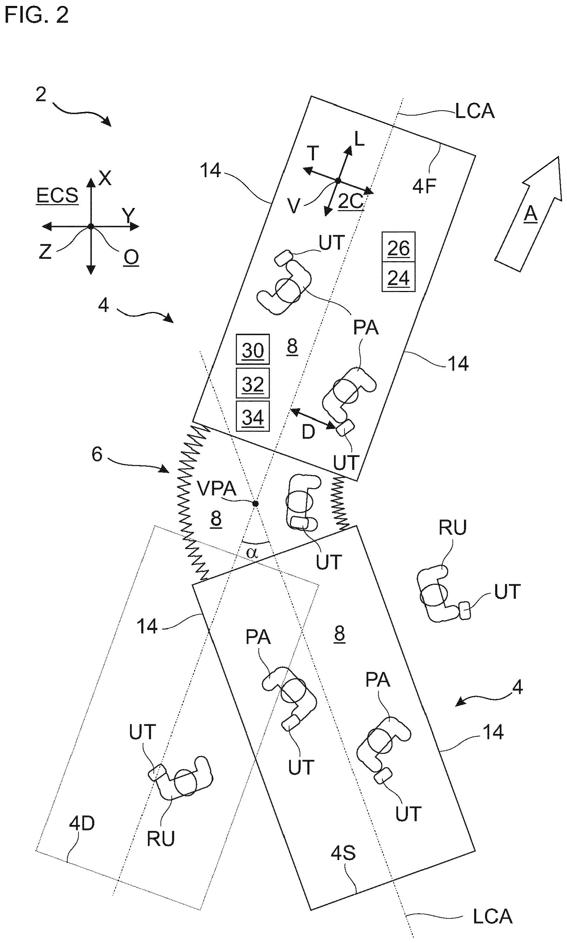

Figure 2 shows a top view of an articulated bus 2 in accordance with the invention. The articulated bus 2 may be similar or identical to the one as described in relation with figure 1. It may be stationary or driving along the arrow A.

The articulated bus 2 comprises two units 4 which are inclined with respect to each other. The units 4 comprise a first unit 4F and a second unit 4S. These units (4F; 4S) may correspond to a front unit and to a rear unit. A fictious unit 4D is represented with a dotted line, said fictious unit 4D being aligned with the first unit 4. Several road users RU and several passengers PA with user terminal UT are represented. The user terminals UT run an application for their detection and positioning in the articulated bus 2.

The articulated bus 2 is provided with an own coordinate system 2C. The bus coordinate system 2C comprises a longitudinal axis L, and transversal axis T, and a vertical axis V. These axes may be perpendicular to each other. The vertical pivot axis VPA of the joint 6 may be parallel to the vertical axis V. The environment of the articulated bus 2 is also provided with a coordinate system, namely an environment coordinate system ECS. The environment coordinate system ECS comprises three axis which are perpendicular to each other: a X axis, an Y axis and a Z axis. The latter may correspond to a vertical direction. The origin O of the environment coordinate system ECS may be chosen arbitrarily.

The terminal detection system 30 is adapted for obtaining the position data of at least one user terminal UT, or of several user terminals UT simultaneously. At least one or each user terminal UT comprises a geolocation device (not represented). The geolocation device provides geolocation data, and more generally position data of the user terminals UT. This user geolocation data is defined in relation with the environment coordinate system ECS, and with the origin O.

The articulated bus 2 comprises a geolocation device 32 which provides geolocation data of said articulated bus 2. This bus geolocation data is advantageously defined in relation with the environment coordinate system ECS, and with the origin O. This bus geolocation data provides the position and the orientation of one of the units 4, for instance the first unit 4F. Thereby, it is possible to define the position of each user terminal UT with respect to the first unit 4F.

The terminal detection system 30 is adapted for computing the inclination information of the second unit 4S with respect to the first unit 4F.

The inclination information comprises an inclination angle α measured between the longitudinal central axes LCA of these units 4. The inclination angle α is measured around the vertical pivot axis VPA. The inclination angle α may be obtained by the inclination measuring module 34. By means of the inclination angle α and of the known geometry of each unit 4, the terminal detection system 30 computes the real time shape of the passenger compartment 8 taking due care of the pivot shift between the units.

The terminal detection system 30 is adapted for assessing whether the user terminals UT are inside or outside the passenger compartment 8. For this purpose, the terminal detection system 30 compares the position of each user terminal UT communicating with it, and the space covered by the passenger compartment 8. If the position is inside said space, the user terminal UT is considered to be in the passenger compartment 8. Then it may be concluded that the associated pedestrian is in the articulated bus 2, and has a passenger PA status.

The detection system 30 is notably adapted for detecting that the user terminal UT inside the fictious unit 4D is actually outside the passenger compartment 8, whereas it is on the longitudinal central axis LCA of the first unit 4F. Thus, it may be considered that the detection system 30 corrects the virtual model of the passenger compartment by means of the inclination information. If it is assessed that the user terminal UT is inside the passenger compartment 8, the computer 24 may generate a detection data, also considered as a presence signal. The detection data may be stored on a memory element, for instance on the computer readable medium 26.

The way of assessing whether a user terminal UT is inside the passenger compartment 8 may be carried in different fashions. Each unit 4 and the joint 6 may be associated with outlines delimiting the passenger compartment 8. The outlines may comprise the walls 14 of the articulated bus 2. If the user terminal UT is inside the outlines, the user terminal UT is considered to be outside the passenger compartment 8.

According to another approach, the longitudinal central axes LCA may be defined with a finite length. If the distance D between the longitudinal central axis LCA and the user terminal UT is smaller or equal to a predefined distance, it is considered that the user terminal UT is inside the passenger compartment 8. By way of example, the predefined distance may be the half of the transversal width of the passenger compartment 8.

Geolocation devices may be satellite-based radio navigation systems. As an alternative or in addition, they may use ground-based beacons.

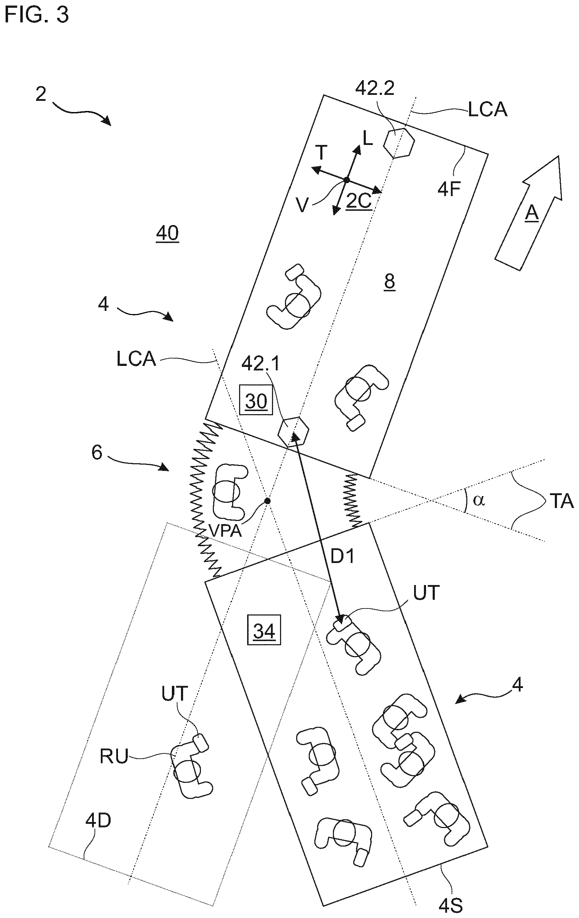

Figure 3 provides a top view of an articulated bus 2 in accordance with the invention. The articulated bus 2 may be similar or identical to those as described in relation with anyone of figures 1 to 2. The articulated bus 2 may be stationary or driving along the arrow A.

The articulated bus 2 comprises two units 4 which are inclined with respect to each other. The units 4 comprise a first unit 4F and a second unit 4S. These units (4F; 4S) may correspond to a front unit and to a rear unit. A fictious unit 4D is represented with a dotted line, said fictious unit 4D being aligned with the unit 4 drawn in the upper half. Several road users RU and several passengers PA with user terminal UT are represented. The user terminals UT run an application for their detection and positioning in the articulated bus 2, more precisely in the passenger compartment 8. Only two user terminals UT are labelled as such for the sake of clarity.

The articulated bus 2 is provided with an own coordinate system 2C. The coordinate system 2C may be associated with the joint 6, one of the units 4, for instance with the first unit 4F. The bus coordinate system 2C comprises a longitudinal axis L, and transversal axis T, and a vertical axis V. These axes may be perpendicular to each other. The vertical pivot axis VPA of the joint 6 may be parallel to the vertical axis V.

The articulated bus 2 comprises a network 40 with which the user terminals UT communicate. The network 40 comprises at least one access point 42, for instance a first access point 42.1. The first access point 42.1 may be disposed at one longitudinal end of the first unit 4F, for instance at the end toward the joint 6. It may be along the longitudinal central axis LCA. The network 40 may be associated with a low power short range wireless protocol. The power emission reduces at distance from the access point(s) 42. Thus, each user terminal UT is adapted for assessing the first distance D1 with the first access point 42.1 (only one first distance is represented for the sake of clarity). The first distance D1 is part of the position data of the user terminal UT. The first access point 42.1 has his own coordinate in the bus coordinate system 2C.

The inclination information comprises an inclination angle α measured between the units 4. The inclination angle α may be obtained by the inclination measuring module 34. The inclination angle α is defined by two transversal axes TA, each of these transversal axis TA being associated with one of the units 4.

When the articulated bus 2 drives and turns, the inclination information changes, and the shape of the passenger compartment 8 as well.

The terminal detection system 30 analyses the general shape of the articulated bus 2. This shape is generally defined by the longitudinal central axes LCA. The terminal detection system 30 is adapted for computing the inclination information of the second unit 4S with respect to the first unit 4F, and for analysing the changes of the inclination information. It is also adapted for analysing the changes of the position data of a user terminal. Variations of the first distance D1 are analysed, and compared with the changes of the inclination information. When the variation is in accordance with the changes, for instance in a predefine range, it may be concluded that the user terminal UT is in the passenger compartment 8. Further, it is deduced that the user terminal UT is in the second unit 4S, for instance the unit 4 at distance from the first access point 42.1. This conclusion may be drawn when the above condition is respected for a threshold period of time. The speed and/or the accelerations of the articulated bus 2 may be used for the current purpose.

Thus, the invention permits to assess whether a user terminal UT is in the passenger compartment 8 with only one access point 42.1. Its position may be calculated in relation with the coordinate system 2C of the articulated bus 2.

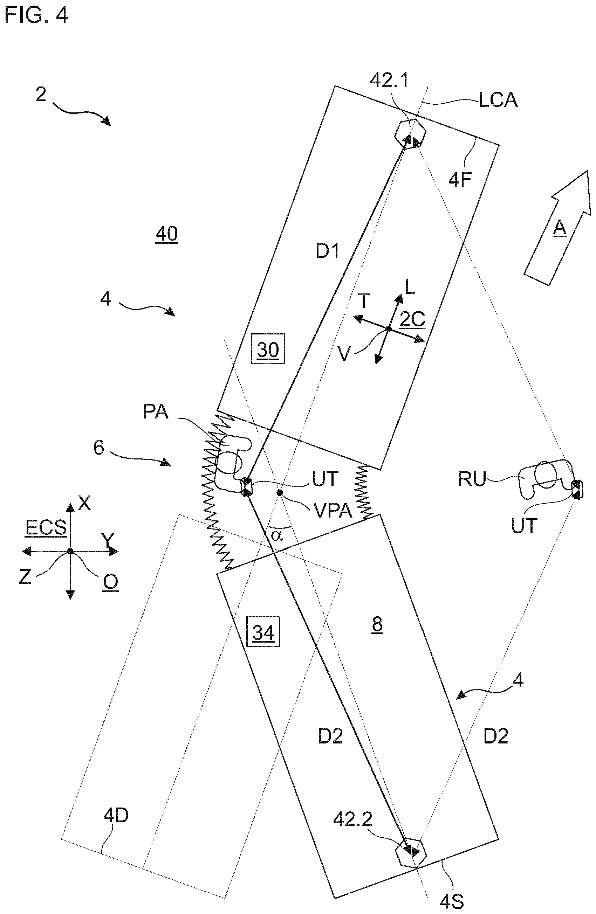

As an option, the network 40 comprises a second access point 42.2. The second access point 42.2 is disposed in the same unit 4 as the first access point 42.1. The first access point 42.1 and the second access point 42.2 are disposed at two longitudinally opposite ends of the first unit 4F. Here, the second access point 42.2 improves accuracy, and may reduce data acquisition time. The positions of the access points 42.1 and 42.2 are defined and known in relation with the coordinate system 2C. Figure 4 provides a schematic illustration of an articulated bus 2 in accordance with the invention. The articulated bus is represented into a bird eye view. The articulated bus 2 may be similar or identical to those as described in relation with anyone of figures 1 to 3. The articulated bus 2 may be stationary or driving along the arrow A.

The articulated bus 2 comprises two units 4 which are inclined with respect to each other. The units 4 comprise a first unit 4F and a second unit 4S. These units (4F; 4S) may correspond to a front unit and to a rear unit. A fictious unit 4D is represented with a dotted line, said fictious unit 4D being aligned with the unit 4 drawn in the upper half. A road user RU and a passenger PA, each with a user terminal UT, are represented. The user terminals UT may run an application for their detection and positioning in the articulated bus 2. The user terminals UT may be cellular phones, or smart watches. They may be connected devices. They may comprise processing units (not represented). The articulated bus 2 is provided with an own coordinate system 2C. The coordinate system 2C may be associated with the joint 6; or one of the units 4, for instance with the first unit 4F. The bus coordinate system 2C comprises a longitudinal axis L, and transversal axis T, and a vertical axis V.

These axes may be perpendicular to each other. The vertical pivot axis VPA of the joint 6 may be parallel to the vertical axis V. The environment of the articulated bus 2 is also provided with a coordinate system, namely an environment coordinate system ECS. The environment coordinate system ECS comprises three axis which are perpendicular to each other: a X axis, an Y axis and a Z axis. The latter may correspond to the vertical direction. The origin O of the environment coordinate system ECS may be chosen arbitrarily.

The articulated bus 2 comprises a network 40 adapted for communicating with the user terminals UT. The user terminals UT are also adapted for communicating with another network (not represented); before, during and after communication with the network 40 of the articulated bus 2. The network 40 comprises at least two access points 42, for instance a first access point 42.1 and a second access point 42.2. The access points (42.1; 42.2) comprise different signatures enabling the user terminals to distinguish them. These access points are distributed in the units 4. The access points 42.1 and 42.2 are disposed at opposite longitudinal ends of the articulated bus 2. The access points (42.1; 42.2) are disposed along the longitudinal central axes LCA of the units 4. The network 40 may be associated with a low power short range wireless protocol. The power emission reduces with the distance from the access point(s) (42.1; 42.2). Thus, each user terminal UT is adapted for assessing the first distance D1 with the first access point 42.1 and the second distance D2 from the second access point 42.2. The first distance D1 and the second distance D2 are part of the position data of each user terminal UT.

In the current figure, it is voluntary illustrated that the access points (42.1; 42.2) are equidistant from the user terminals UT. Then, the user terminals UT have a same first distance D1 and a same second distance D2. Yet, the terminal detection system 30 is configured for determining which user terminal UT is inside the passenger compartment 8, and which one is in the environment. The user terminals UT are adapted for scanning the access points (42.1; 42.2) and for estimating the respective distances D1 and D2 through power emission level measurement. The user terminals UT are adapted for sending this information to the articulated bus 2 through its network 40, thereby forming position data available to the terminal detection system 30. The user terminal UT may automatically connect to the network 40 by at least one of its access points. Automatic connection may be enabled by the application.

The terminal detection system 30 is adapted for computing the inclination information of the second unit 4S with respect to the first unit 4F. The inclination information comprises an inclination angle α measured between the longitudinal central axes LCA of these units 4. The inclination angle α is measured about the vertical pivot axis VPA. The inclination angle α may be obtained by the inclination measuring module 34. By means of the inclination angle α and of the known geometry of each unit 4, the terminal detection system 30 computes the shape of the passenger compartment 8.

By means of the inclination angle α, of the known shape of the units 4 and of the joint 6, the terminal detection system 30 is adapted for computing an updated shape of the passenger compartment 8. The updated shape may be obtained in real time. Since the distances (D1; D2) are obtained as previously detailed, and since the positions of the access points (42.1; 42.2) in the units are known, the terminal detection system 30 concludes that the user terminal UT on the left side is in the passenger compartment 8, and that the user terminal on the right side is outside; whereas these user terminals UT have the same first and second distances (D1; D2).

In the current illustration the inboard user terminal UT is in the joint 6, however the terminal detection system 30 also identifies user terminals in the first unit 4F and in the second unit 4S. As an option, the positions of the user terminals are computed in the coordinate system 2C of the articulated bus 2. As an alternative, these positions are defined in relation with the environment coordinate system ECS.

Thus, the invention is able to recognize the user terminals with a simple information and a simple data. Thus, computation is faster and safer. Accuracy is improved as well.

As an option, one of the access points is in the joint 6.

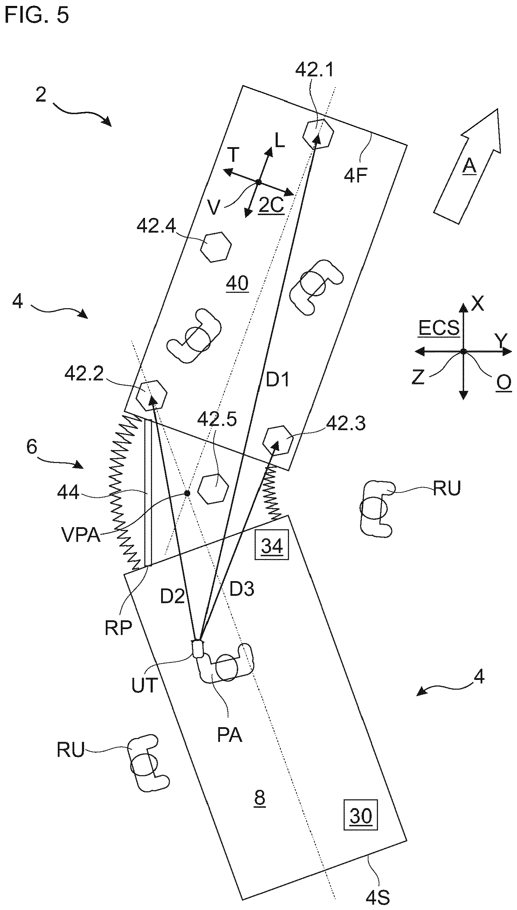

Figure 5 provides a schematic illustration of an articulated bus 2 in accordance with the invention. The articulated bus is represented into a top view. The articulated bus 2 may be similar or identical to those as described in relation with anyone of figures 1 to 4. The articulated bus 2 may be stationary or driving along the arrow A.

The articulated bus 2 comprises two units 4 which are inclined with respect to each other. The units 4 comprise a first unit 4F and a second unit 4S. These units (4F; 4S) may correspond to a front unit and to a rear unit. Several persons are represented in and outside the passenger compartment 8. The road users RU may be pedestrians, cyclists, or drivers of other motorised vehicles than the current articulated bus 2.

One of the passenger PA is represented with a user terminal UT. Only one user terminal UT is currently labelled but other passengers PA and other road users RU may each wear a user terminal UT. The user terminal UT may run an application for its detection and positioning in the articulated bus 2. The user terminal UT may be a cellular phone, or smart watch. it may generally be a connected device.

The articulated bus 2 is provided with an own coordinate system 2C. The coordinate system 2C may be associated with the joint 6; or one of the units 4, for instance with the first unit 4F. The bus coordinate system 2C comprises a longitudinal axis L, and transversal axis T, and a vertical axis V. These axes may be perpendicular to each other. The vertical pivot axis VPA of the joint 6 may be parallel to the vertical axis V. The environment of the articulated bus 2 is also provided with a coordinate system, namely an environment coordinate system ECS. The environment coordinate system ECS comprises three axis which are perpendicular to each other: a X axis, an Y axis and a Z axis. The latter may correspond to the vertical direction. The origin O of the environment coordinate system ECS may be chosen arbitrarily.

The articulated bus 2 comprises a network 40 adapted for communicating with the user terminal UT; inboard or outboard. The user terminal UT is also adapted for communicating with another network (not represented); before, during and after communication with the network 40 of the articulated bus 2. The network 40 comprises at least three access points 42, for instance a first access point 42.1, a second access point 42.2 and a third access point 42.3. The three access points are arranged in the first unit 4F. The second unit 4S is notably free of access point to the network 40.

As an option, the network 40 further comprises a fourth access point 42.4. The first to fourth access points (42.1-42.4) may define a polygon, and preferably a polyhedral. They may be disposed in the first unit 4F. As a further option, the network 40 comprises a fifth access point 42.5. The fifth access point 42.5 may be disposed in the joint 6. It may be stationary with respect to the first unit. It may be at distance from the first unit 4F and the second unit 4S. As an option, the fifth access point 42.5 may replace the fourth access point.

The access points (42.1-42.5) comprise different signatures enabling the user terminals to distinguish them. These access points (42.1-42.4) may be distributed in the first unit 4F. The access points (42.1; 42.5) are disposed along the longitudinal central axis LCA of the first unit 4, for instance at different distances from said longitudinal central axis LCA. The network 40 may be associated with a low power short range wireless protocol. The power emission reduces with the distance from the access point(s) (42.1-42.5). Thus, each or the user terminal UT is adapted for assessing the first distance D1 with the first access point 42.1, the second distance D2 from the second access point 42.2, the third distance D3 to the third access point 42.3. The first to third distance D1-D3 are part of the position data of the user terminal UT. The fourth distance and the fifth distance (not represented) from the fourth access point 42.4 and the fifth access point 42.5 respectively, may also be assessed.

The user terminals UT are adapted for scanning the access points (42.1; 42.5) and for estimating the respective distances D1-D3 through power emission level measurements. The user terminals UT are adapted for sending this information to the articulated bus 2 through its network 40, thereby forming position data available to the terminal detection system 30. As an alternative, the distances may be sent to another network carrying out the process according to the invention, with a computer separate from the articulated bus 2.

The terminal detection system 30 is adapted for computing the inclination information of the second unit 4S with respect to the first unit 4F. The inclination information may comprise the position of a reference point RP of the second unit 4S defined in relation with the bus coordinate system 2C. The position of a reference point RP may be obtained by the inclination measuring module 34. The reference point RP may be an end of an actuator such as a hydraulic cylinder 44 controlling swivel motions of the units 4.

In addition, the inclination information may comprise an inclination angle α measured between the longitudinal central axes LCA of these units 4. The inclination angle α is measured about the vertical pivot axis VPA.

By means of the inclination information and of the known geometry of each unit 4, the terminal detection system 30 computes the shape of the passenger compartment 8 in real time.

By means of the position of a reference point RP, of the predefined shape of the units 4 and of the joint 6, the terminal detection system 30 is adapted for computing an updated shape of the passenger compartment 8. The updated shape may be obtained in real time while the units 4 pivot with respect to each other. Since the distances (D1-D3) are obtained as previously detailed, and since the positions of the access points (42.1; 42.5) in the units are known, the terminal detection system 30 concludes that the user terminal UT is in the passenger compartment 8. Should a user terminal UT would have been outside the bus, the terminal detection system 30 would have recognized this position by means of geometric calculations.

In one alternative of the invention, all the access points of the first unit 4 are arranged at one longitudinal end of said unit, for instance the end opposite to the second unit.

Then, all access point (42.1-42.5) may be in a same unit 4. Thus, computation is easier since their respective spacing between each other are fixed. The current arrangement requires less computation resources. Wiring is easier.

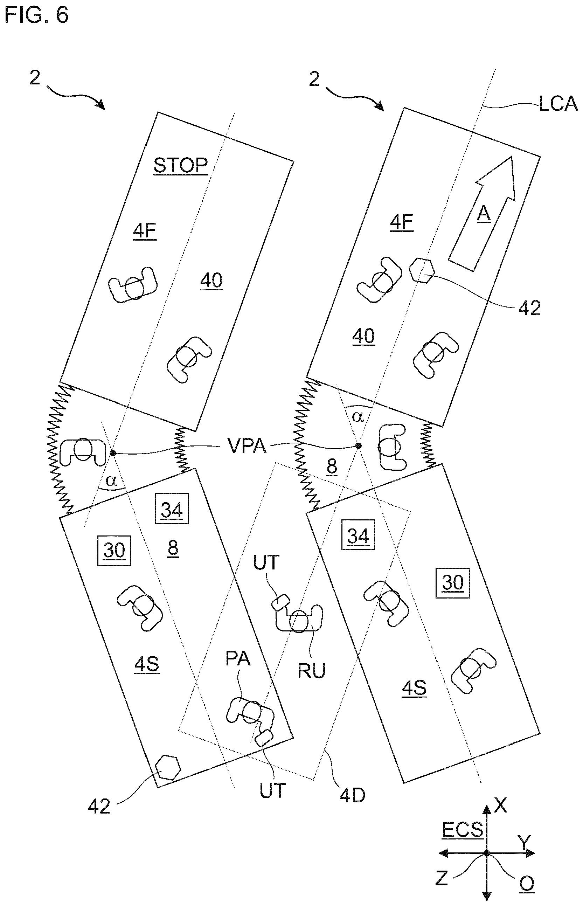

Figure 6 provides a schematic illustration of two articulated buses 2 in accordance with the invention, and which are close and along each other.

At least one of the two articulated buses 2 may be similar or identical to anyone of the ones as described in relation figures 1 to 5. The articulated buses 2 may be similar or identical.

A left articulated bus 2 and a right articulated bus 2 are represented in inclined configurations, and exhibit inclination angles α. The inclination angles α may be different. The left articulated bus 2 forms a recess toward a protrusion of the right articulated bus 2. The joint 6 of the right articulated bus 2 forms a tip toward the recess of the left articulated bus 2. A fictious unit 4D of the right articulated bus 2 is represented with a dotted line, said fictious unit 4D being aligned with the first unit 4F. It may be aligned with the longitudinal central axis LCA of the first unit 4F. It may overlap the second unit 4S of the left articulated bus 2.

The left articulated bus 2 may stop, and is stationary. The right articulated bus 2 is driving at a non-null speed along the arrow A. Then, there is a speed difference between the articulated buses 2, with a direction which may be represented through the arrow. As an alternative, the articulated buses 2 drive in different directions, or drive at different speeds.

A road user RU is represented between the two articulated buses 2 and holds a user terminal UT. A passenger PA is associated with another user terminal UT and stands in the passenger compartment 8 of the left articulated bus 2. The road user RU and the passenger PA are currently represented in the fictious unit 4D of the right articulated bus 2.

Each articulated bus 2 comprises a network 40, notably a dedicated network 40. As the articulated buses 2 may communicate together, the dedicated networks 40 may form a common network. The articulated buses 2 may communicate their respective positions in the environment coordinate system ECS. The environment coordinate system ECS comprises three axis which are perpendicular to each other: a X axis, an Y axis and a Z axis. The latter may correspond to the vertical direction. The origin O of the environment coordinate system ECS may be chosen arbitrarily. They may communicate distance between them, and or the speed difference. They may communicate information about their passengers PA, for instance the identification number of their user terminals.

Each network 40 may comprise an access point 42. For instance, an access point 42 is disposed in the second unit 4S of the left articulated bus 2, and another access point 42 is disposed in the first unit of the right articulated bus 2.

The user terminals UT of the passenger PA may carry out an access point scan in order to detect the access points 42 with their signatures, and to measure their corresponding power emissions which progressively decrease with the distance from said access points 42. Then the user terminals UT of the passenger PA will detect the access point 42 of the left articulated bus 2 with a constant power emission level, and will detect the access point 42 of the right articulated bus 2 whose power emission level varies. Then, the user terminals UT of the passenger PA will estimate the distances with the different access points 42. These distances are part of the position data of the user terminal UT. The change of power emission is also part of the position data, and participate to identify that the user terminal is not in one of the articulated bus 2, namely the left one. Thus, communication and computation will occur with the right articulated bus 2.

The user terminals UT of the passenger PA will also detect that one of the access points 42 is moving, which means that there are two access points in different articulated buses 2.

As an option, the user terminal comprise an accelerometer used for providing the user terminal speed, acceleration, and position. Then the data from the accelerometer is used for the position data.

Each terminal detection system 30 is adapted for computing the inclination information of the second unit 4S with respect to the corresponding first unit 4F. The inclination information comprises an inclination angle α measured between the longitudinal central axis LCA. The inclination angle α are measured around the vertical pivot axes VPA. The inclination angle α may be obtained by the inclination measuring modules 34. By means of the inclination angle α and of the known geometries of each unit 4, the terminal detection systems 30 compute the shapes of the different passenger compartments 8 depending of their orientation differences.

Due to communication between the user terminals UT of the passenger PA with the terminal detection system 30 of the left articulated bus 2, and by means of the actual shape configuration of the left articulated bus 2, it is assessed whether the user terminal is inside the left passenger compartment 8 or not.

Similarly, the terminal detection systems 30 of each articulated bus 2 may detect the user terminal UT of the road user RU between them. Since this road user RU is detected in a blind spot, a warning signal may be provided to the articulated bus drivers in order to increase safety.

Thus, communication between the articulated bus and/or equipment in the user terminals and/or in the articulated bus allows to provide a single access point in each articulated bus. The overall number of access points in a bus fleet is reduced. Thus, computation decrease in each articulated bus, and is shared between the user terminals.

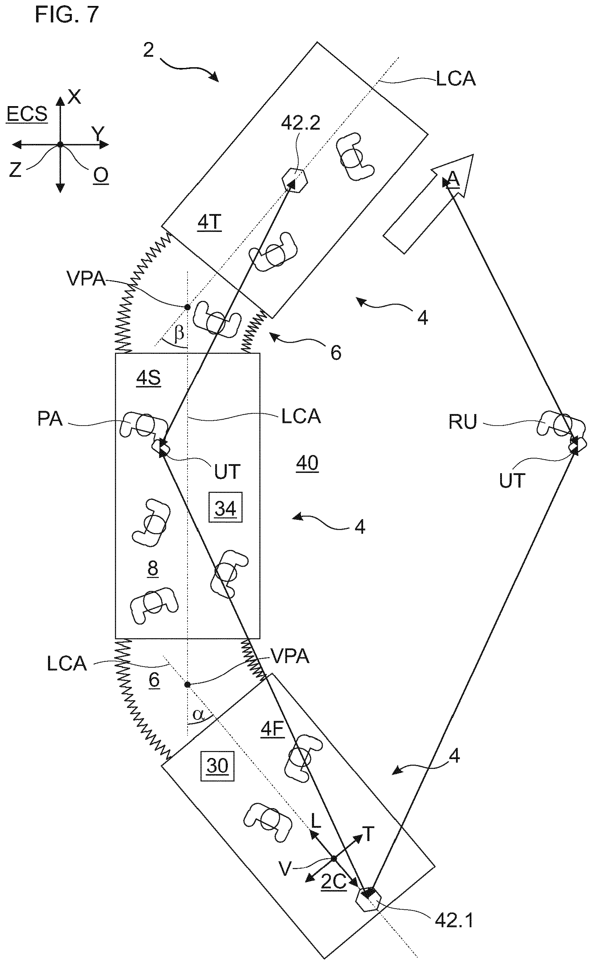

Figure 7 provides a top view of an articulated bus 2 in accordance with the invention. The articulated bus 2 may be similar or identical to those as described in relation with anyone of figures 1 to 6, and notably comprises three units 4. The articulated bus 2 may be stationary or driving along the arrow A.

The articulated bus 2 comprises at least three units 4 which are inclined with respect to each other. The units 4 comprise a first unit 4F, a second unit 4S and a third unit 4T. These units (4F; 4S; 4T) may correspond to a front unit, a central unit and to a rear unit. A road user RU and a passenger PA, each with a user terminal UT, are represented. The user terminals UT run an application for their detection and positioning in the articulated bus 2. Only two user terminals UT are represented for the sake of clarity. The user terminals UT may be cellular phones, or smart watches. More generally, they may be connected devices.

The articulated bus 2 is provided with an own coordinate system 2C. The coordinate system 2C may be associated with one of the joints 6; or one of the units 4, for instance with the first unit 4F. The bus coordinate system 2C comprises a longitudinal axis L, and transversal axis T, and a vertical axis V. These axes may be perpendicular to each other. The vertical pivot axis VPA of the joints 6 may be parallel to the vertical axis V. The environment of the articulated bus 2 is also provided with a coordinate system, namely an environment coordinate system ECS. The environment coordinate system ECS comprises three axis which are perpendicular to each other: a X axis, an Y axis and a Z axis. The latter may correspond to the vertical direction. The origin O of the environment coordinate system ECS may be chosen arbitrarily.

The articulated bus 2 comprises a network 40 adapted for communicating with the user terminals UT. The user terminals UT are also adapted for communicating with another network (not represented); before, during and after communication with the network 40 of the articulated bus 2. The network 40 comprises at least two access points 42, for instance a first access point 42.1 and a second access point 42.2. The access points (42.1; 42.2) comprise different signatures enabling the user terminals UT to distinguish them. These access points are distributed in the units 4. The access points 42.1 and 42.2 are disposed at opposite units 4F and 4T of the articulated bus 2. The access points (42.1; 42.2) are disposed along the longitudinal central axes LCA of the units 4. The network 40 may be associated with a low power short range wireless protocol. The power emission reduces with the distance from the access point(s) (42.1; 42.2). Thus, each user terminal UT is adapted for assessing the first distance D1 with the first access point 42.1 and the second distance D2 from the second access point 42.2. The first distance D1 and the second distance D2 are part of the position data of each user terminal UT.

In the current figure, it is voluntary illustrated that the access points (42.1; 42.2) are equidistant from the user terminals UT inside and outside the passenger compartment 8. Then, the user terminals UT have a same first distance D1 and a same second distance D2. Yet, the terminal detection system 30 is configured for determining which user terminal UT is inside the passenger compartment 8, and which one is in the environment. The user terminals UT are adapted for scanning the access points (42.1; 42.2) and for estimating the respective distances D1 and D2 through power emission level measurements. The user terminals UT are adapted for communicating this information to the articulated bus 2 through its network 40, thereby forming position data available to the terminal detection system 30.

The terminal detection system 30 is adapted for computing the inclination information of the first and third units with respect to the second unit 4S. The inclination information comprises the inclination angle α measured between the longitudinal central axes LCA of the first unit 4F and the second unit 4S. The inclination information further comprises the inclination angle β measured between the longitudinal central axes LCA of the third unit 4T and the second unit 4S. The inclination angles α and β are measured about the vertical pivot axes VPA, in the corresponding joints 6. The inclination angles α and β may be obtained by the inclination measuring module 34. By means of the inclination angles (α; β) and of the known geometry of each unit 4, the terminal detection system 30 computes the shape of the passenger compartment 8.

By means of the inclination angles (α; β), of the known shapes of the units 4 and of the joints 6, the terminal detection system 30 is adapted for computing an updated shape of the passenger compartment 8. The updated shape may be obtained in real time. Since the distances (D1; D2) are obtained as previously detailed, and since the positions of the access points (42.1; 42.2) in the units are known, the terminal detection system 30 concludes that the user terminal UT on the left side is in the passenger compartment 8, and that the user terminal on the right side is outside; whereas these user terminals UT have the same first and second distances (D1; D2). The terminal detection system 30 is also adapted for distinguishing user terminals UT at different first and second distances (D1; D2) from the access points (42.1; 42.2).

In the current illustration the inboard user terminal UT is in the second unit 4S, however the terminal detection system 30 also identifies user terminals UT in the first unit 4F and in the third unit 4T, or in the joints 6. As an option, the positions of the user terminals are computed in the coordinate system 2C of the first unit 4F. As an alternative, these positions are defined in relation with the environment coordinate system ECS. Further, the coordinate system 2 may be fixed to the second unit or to the third unit.

Thus, the invention is able to recognize the user terminals with a simple information and a simple data. Thus, computation is faster and safer. Accuracy is improved as well.

As an option, one of the access points is in the joint.

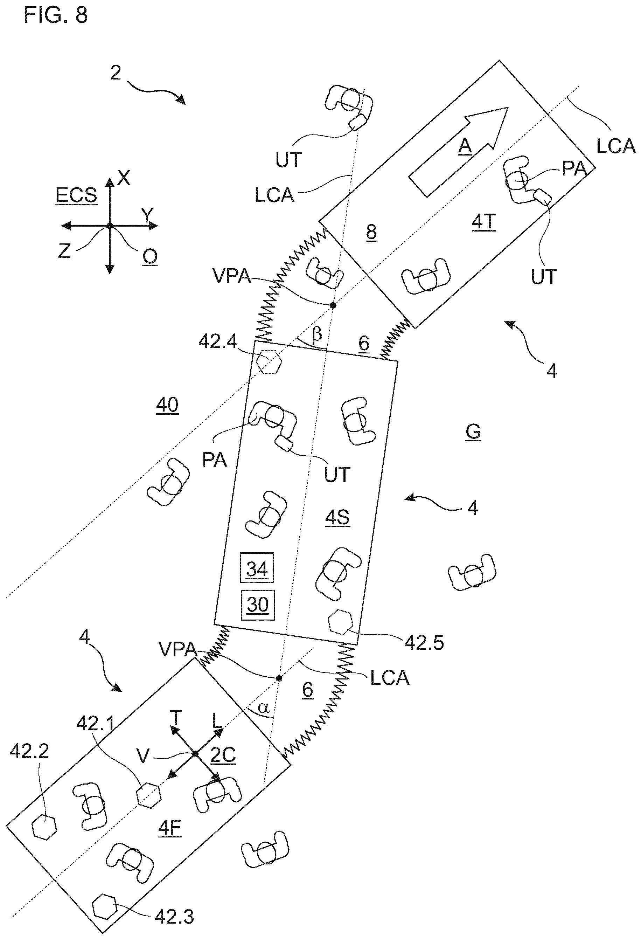

Figure 8 provides a top view of an articulated bus 2 in accordance with the invention. The articulated bus 2 may be similar or identical to those as described in relation with anyone of figures 1 to 7. The articulated bus in accordance with the current preferred embodiment notably comprises three units 4. The articulated bus 2 may be stationary or driving along the arrow A.

The articulated bus 2 comprises at least three units 4 which are inclined with respect to each other. The units 4 comprise a first unit 4F, a second unit 4S and a third unit 4T. These units (4F; 4S; 4T) may correspond to a front unit, a central unit and to a rear unit. The second unit 4S forms a physical link connecting the first unit 4F to the third one. A road user RU and two passengers PA, each with a user terminal UT, are represented. The considered passengers PA are in the second unit 4S and in the third unit 4T. The user terminals UT run an application for their detection and positioning in the articulated bus 2. Only three user terminals UT are represented for the sake of clarity. The user terminals UT may be cellular phones, or smart watches. More generally, they may be connected devices, adapted for wireless communication.

The articulated bus 2 is provided with its own coordinate system 2C. The coordinate system 2C may be associated with one of the joints 6; or one of the units 4, for instance with the first unit 4F. The bus coordinate system 2C comprises a longitudinal axis L, and transversal axis T, and a vertical axis V. These axes (L; V; T) may be perpendicular to each other. The vertical pivot axis VPA of the joints 6 may be parallel to the vertical axis V. The environment of the articulated bus 2 is also provided with a coordinate system, namely an environment coordinate system ECS. The environment coordinate system ECS comprises three axis which are perpendicular to each other: a X axis, an Y axis and a Z axis. The latter may correspond to the vertical direction. The origin O of the environment coordinate system ECS may be chosen arbitrarily, for instance on the ground G. The terminal detection system 30 is adapted for computing the inclination information of the second units 4. The inclination information comprises the inclination angle α measured between the longitudinal central axes LCA of the first unit 4F and the second unit 4S. The inclination information further comprises the inclination angle β measured between the longitudinal central axes LCA of the third unit 4T and the second unit 4S. The inclination angles α and β are measured about the vertical pivot axes VPA, in the corresponding joints 6. The inclination angles α and β are measured on a horizontal plane, for instance by projection on the ground G. The inclination angles α and β may be obtained by the inclination measuring module 34. By means of the inclination angles (α; β) and of the known geometry of each unit 4, the terminal detection system 30 computes the shape of the passenger compartment 8.

The articulated bus 2 comprises a network 40 adapted for communication with the user terminals UT; inboard or outboard. The user terminals UT are also adapted for communicating with another network (not represented); before, during and after communication with the network 40 of the articulated bus 2. The network 40 comprises at least three access points 42, for instance a first access point 42.1, a second access point 42.2 and a third access point 42.3. The three access points are arranged in the first unit 4F. They may define a triangle.

The second unit 4S and/or the third unit 4T is notably free of access point to the network 40.

As an option, the network 40 further comprises a fourth access point 42.4. The first to fourth access points (42.1-42.4) may define a polygon, and preferably a polyhedral. As a further option, the network 40 comprises a fifth access point 42.5. It may be at distance from the first unit 4F and the second unit 4S. As an option, the fifth access point 42.5 may replace the fourth access point. The first to fifth access points 42.1-42.5 may be disposed at different heights. The fourth and fifth access points 42.4 and 42.5 may be disposed in the second unit 4S. Thus, a user terminal UT, for instance in the first unit 4F or the second unit 4S, may be adapted for providing the inclination information, and notably the inclination angle α by means of the known positions of the access points 42.1-42.5. Thus, the inclination measuring module 34 is not an essential aspect of the invention. It may be integrated in a user terminal UT; and may be part of the application run by said user terminal UT.

The access points (42.1-42.5) comprise different signatures enabling the user terminals UT to distinguish them. These access points (42.1-42.4) may be distributed in the first unit 4F. The access points (42.1; 42.5) are disposed along the longitudinal central axis LCA of the first unit 4, for instance at different distances from said longitudinal central axis LCA. The network 40 may be associated with a low power short range wireless protocol. The power emission reduces with the distance from the access point(s) (42.1-42.5). Thus, each or the user terminal UT is adapted for assessing the first distance (not represented) with the first access point 42.1, the second distance (not represented) from the second access point 42.2, the third distance (not represented) to the third access point 42.3. The first to third distance are part of the position data of the user terminal UT. The fourth distance and the fifth distance (not represented) from the fourth access point 42.4 and the fifth access point 42.5 respectively, may also be calculated.

The user terminals UT are adapted for scanning the access points (42.1; 42.5) and for estimating the respective distances through power emission level measurements. The user terminals UT are adapted for sending this information to the articulated bus 2 through its network 40, thereby forming position data available and provided to the terminal detection system 30. As an alternative, the distance may be sent to another network carrying out the process according to the invention, with a computer separate from the articulated bus 2.

The terminal detection system 30 is adapted for computing the inclination information of the second unit 4S with respect to the first unit 4F. The inclination information may comprise the position of a reference point.

By means of the inclination information and of the known geometries of each unit 4, the terminal detection system 30 computes the shape of the passenger compartment 8 depending of the orientation difference of the different segments of said passenger compartment.

Since the distances are obtained as previously detailed, and since the positions of the access points (42.1; 42.5) in the units are known, the terminal detection system 30 concludes that the user terminal UT is in the passenger compartment 8. Should a user terminal would have been outside the bus, the terminal detection system 30 would have recognized this position by means of geometric calculations.

Then, the invention uses a virtual model of the passenger compartment 8 in order to assess whether the user terminals UT are in or out. This virtual model is adapted for variation of the inclination angles (α; β) ranging from -35° to +35°. These inclination angles (α; β) may vary in different direction in order to improve manoeuvrability when the wheels are independently steered.

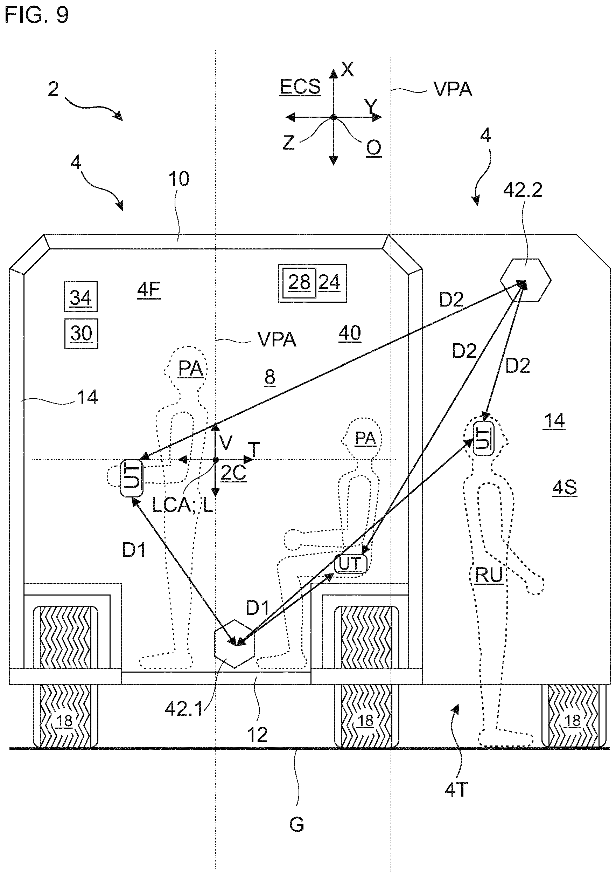

Figure 9 provides a schematic illustration of a through cut of an articulated bus in accordance with the invention. The articulated bus 2 may be similar or identical to those as described in relation with anyone of figures 1 to 8. The articulated bus 2 is represented by means of a through cut crossing its first unit 4F, perpendicularly to its longitudinal axis L. Another unit 4 is apparent in the background, said another unit 4 possibly being a second unit 4S. A third unit 4T may be hidden by the second unit 4S, and exhibits one of its wheels 18. The current configuration may generally correspond to the one as illustrated in figure 8, where the at least three units are inclined with respect to one another, and where the first and third unit may generally be parallel whereas their longitudinal central axes are offset.

The units (4F; 4S; 4T) may correspond to a front unit, a central unit and to a rear unit. The second unit 4S forms a physical link connecting the first unit 4F to the third one. A road user RU outside the passenger compartment, a seated passenger PA and a standing passenger PA are represented. Each of them uses a dedicated user terminal UT. The considered passengers PA are in the first unit 4F. The user terminals UT run an application for their detection and positioning in the articulated bus 2. Only three user terminals UT are represented for the sake of clarity. The user terminals UT may be cellular phones, or smart watches, or a head set. More generally, they may be connected devices, adapted for wireless communication.

The articulated bus 2 is provided with its own coordinate system 2C. The coordinate system 2C may be associated with one of the joints; or one of the units 4, for instance with the first unit 4F which is currently cut. The bus coordinate system 2C comprises a longitudinal axis L, and transversal axis T, and a vertical axis V. These axes (L; V; T) may be perpendicular to each other. The vertical pivot axis VPA of the joints may be parallel to the vertical axis V. The environment of the articulated bus 2 is also provided with a coordinate system, namely an environment coordinate system ECS. The environment coordinate system ECS comprises three axis which are perpendicular to each other: a X axis, an Y axis and a Z axis. The latter may correspond to the vertical direction. The origin O of the environment coordinate system ECS may be chosen arbitrarily.

The terminal detection system 30 is adapted for computing the inclination information of the second units 4 with respect to its adjacent units (4F; 4T). The inclination information comprises the first inclination angle measured between the longitudinal central axes LCA of the first unit 4F and the second unit 4S. The inclination information further comprises the second inclination angle measured between the longitudinal central axes of the third unit 4T and the second unit 4S. The first and second inclination angles are measured about the vertical pivot axes VPA. The first inclination angle and the second inclination angle are measured on a planar surface, for instance by projection on the ground G. The inclination angles may be obtained by the inclination measuring module 34. By means of the first and second inclination angles and of the known geometry of each unit 4, the terminal detection system 30 computes the shape of the passenger compartment 8.

The articulated bus 2 comprises a network 40 adapted for communication with the user terminals UT; inboard or outboard. Thus, the network 40 is adapted for communication beyond its walls 14.

The user terminals UT are also adapted for communicating with another network (not represented); before, during and after communication with the network 40 of the articulated bus 2. The network 40 comprises at least two access points 42, for instance a first access point 42.1, and a second access point 42.2. These access points are distributed along the articulated bus 2. For instance, the first access point 42.1 is disposed in the first unit 4F, for instance on the platform 12. The second access point 42.2 may be disposed along the second unit 4S or the third unit 4T. It may be disposed in one of the joints. It may be joined to the roof 10, inside or outside the passenger compartment 8. Then, the access points (42.1; 42.2) are at different levels. They may be at difference height from the ground G

The second unit 4S or the third unit 4T is free of access point to the network 40.

As an option, the network 40 further comprises a third access point, a fourth access point, and a fifth access point. Additional access points may be provided.

The access points (42.1-42.2) comprise different signatures enabling each user terminal UT to distinguish them. The access points (42.1; 42.2) may be transversally centred on the associated longitudinal central axis LCA. As an alternative, they may be at different transversal distances from the associated longitudinal central axes LCA.

The network 40 may be associated with a low power short range wireless protocol.

The power emission reduces with the distance from the access point(s) (42.1-42.2). Thus, each or the user terminal UT is adapted for assessing the first distance D1 with the first access point 42.1 and the second distance D2 from the second access point 42.2. The first and second distance D1-D2 are part of the position data of the user terminal UT.

The user terminals UT are adapted for scanning the access points (42.1; 42.2) available in the network 40 and for estimating the respective distances D1-D2 through power emission level measurements. The user terminals UT are adapted for sending this information to the articulated bus 2 through its network 40, thereby forming position data available and provided to the terminal detection system 30.

By means of the inclination information and of the available geometries of each unit 4, the terminal detection system 30 computes the shape of the passenger compartment 8 taking due care of the first inclination angle and the second inclination angle if any. Trigonometry formulae may be used by the computer 24, and notably its processing unit 28.

Since the distances (D1-D2) are obtained as previously detailed, and since the positions of the 2 access points (42.1; 42.2) in their respective units are known, the terminal detection system 30 concludes for each user terminal UT whether it is in the passenger compartment 8.

The invention is adapted for detecting user terminal inside and outside the passenger compartment 8, independently of the height of the user terminals.

The invention considers combining the teachings of figures 1 to 9 in a single articulated bus.

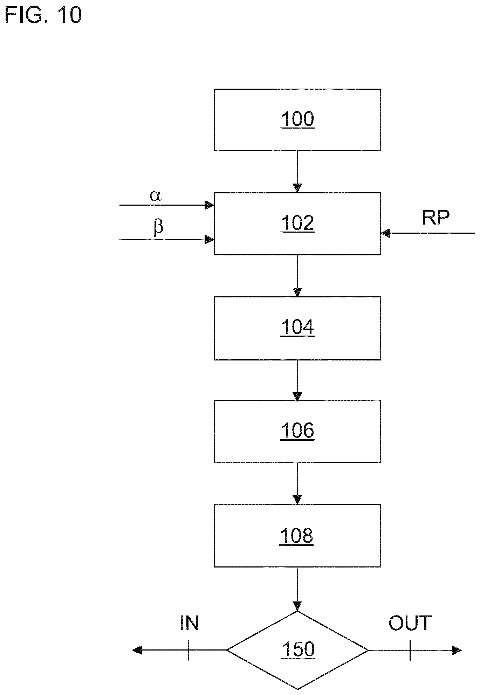

Figure 10 provides a schematic illustration of a diagram block of a process in accordance with a preferred embodiment of the invention, for detecting a user terminal in the passenger compartment of an articulated bus. The articulated bus is notably in accordance with one as described in relation with anyone of figures 1 to 9.

The process comprises the steps:
- obtaining 100 position data of a user terminal, said user terminal notably being outside the first unit,
- computing 102 inclination information of the second unit with respect to the first unit,
- computing 104 the shape of the passenger compartment by using the inclination information,
- geolocation 106 of the articulated bus in order to obtain articulated bus geolocation data,
- obtaining 108 orientation data of the articulated bus, notably of at least one of the two units,
- assessing 150 whether the user terminal is inside the passenger compartment based on the shape of the passenger compartment and the position data, and notably the articulated bus geolocation data.

Step obtaining 100 position data comprises a step geolocation of the user terminal. At step obtaining 100, the articulated bus is stationary. It may be in a boarding configuration, where road users enter the passenger compartment, and where passengers leave it. Thus, their user terminals may be moving with respect to the passenger compartment. As an alternative the articulated bus may be driving at a non-null speed.

Step computing 102 inclination information uses the inclination angle (α; β), and/or the coordinate of the reference point RP. At step computing 102 inclination information, the inclination angle (α; β) is comprised between: 1° and 45°, preferably between 5° and 35°, more preferably between 10° and 30°; values included.

This process may be carried out without access point. Thus, the articulated bus may be free of network providing access point to the user terminals.

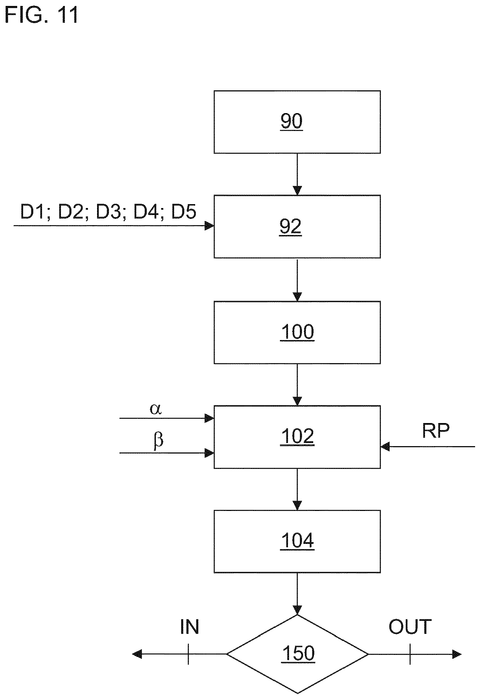

Figure 11 provides a schematic illustration of a diagram block of a process in accordance with a preferred embodiment of the invention, for detecting a user terminal in the passenger compartment of an articulated bus. The articulated bus is notably in accordance with one as described in relation with anyone of figures 1 to 9. The articulated bus notably comprises a network with at least one access point, possibly at least two access point, for instance at least five access points.

The process comprises the steps:
- access point scan 90 in order to identify access points of a network,
- power comparison 92 of emissions from the access points in order to obtain the distances with respect to the access points, each access point of the network comprising a signature;
- obtaining 100 position data of a user terminal, said position data being defined by means of the distances with respect to the access points,
- computing 102 inclination information of the second unit with respect to the first unit,
- computing 104 the shape of the passenger compartment based on the inclination information,
- assessing 150 whether the user terminal is inside the passenger compartment by means of the shape of the passenger compartment and the position data.

At step obtaining 100, the articulated bus drives at a non-null speed. It may drive at least at : 1 m/s, or 10 m/s.

At step computing 102 inclination information uses the inclination angle (α; β), and/or the position of the reference point RP. At step computing 102 inclination information, the inclination angle (α; β) changes at least of: 2°, or 5°, or 10°, or 20°. The angle change may be in one direction and in the other direction. The angle may vary around an average value. The inclination information may comprise a transversal offset and/or a longitudinal offset between the units. It may comprise an inclination difference, with respect to the vertical axis, between the units. The units may be tilted or lean differently, for instance toward different sides.

At step assessing 150, the first distance to fifth distance (D1-D5) are used in order to define if a considered user terminal is in the passenger compartment or away.

At step assessing 150 it is concluded that the user terminal is in the passenger compartment if the position data changes in a proportion which is comprised in a predefined range, and/or if it changes in function of the inclination angle (α; β).

For instance, when an articulated bus drives, it generally turns left and right. Then a passenger in the passenger compartment and in the second unit will change of position with respect to the first unit because the passenger compartment will show bending motions. The inclination angle (α; β) is a parameter with which the position of the second unit may be defined. Then, if the position of a user terminal follows a similar position law, it may be deduced that it is actually in the passenger compartment. A criterion on a threshold period may be added as well.

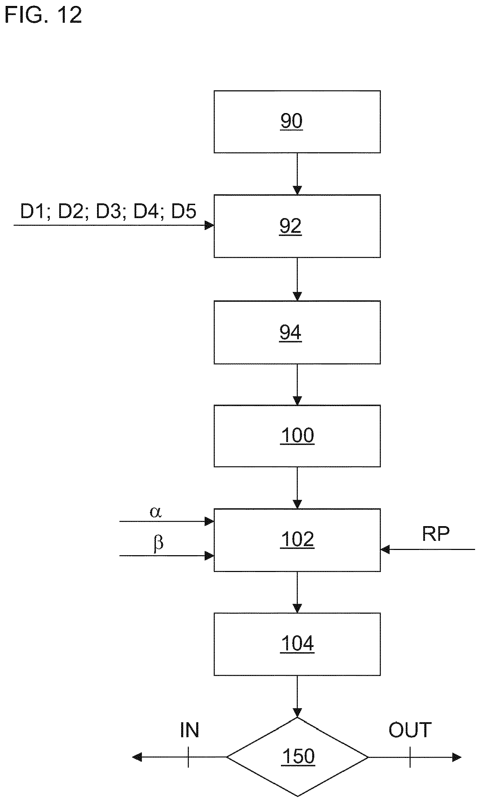

Figure 12 provides a schematic illustration of a diagram block of a process in accordance with a preferred embodiment of the invention, for detecting a user terminal in the passenger compartment of a first articulated bus, said articulated bus being along a second articulated bus. These articulated buses are notably similar or identical, and notably in accordance with one as described in relation with anyone of figures 1 to 9. Each articulated bus notably comprises a network with an access point. The networks may communicate with each other.

The process comprises the steps:
- access point scan 90 in order to identify access points of a network,
- power comparison 92 of the access points in order to obtain the distances with respect to the access points, each access point of the network comprising a signature,
- communication 94 between the articulated buses,
- obtaining 100 position data of a user terminal, said position data being defined by, at least, of the distances with respect to the access points,
- computing 102 inclination information of the second unit with respect to the first unit,
- computing 104 the shape, such as a shape data; of the passenger compartment by using the inclination information,
- assessing 150 whether the user terminal is inside the passenger compartment by using the shape of the passenger compartment and the position data.

At step access point scan 90, the articulated buses drive at different speeds. For instance, the first articulated bus is stationary, whereas the second one drives at a non-null speed.

At step power comparison 92, the distances with respect to the access points are predefined in relation with the power emissions.

At step communication 94, the articulated buses communicate at least one of the following communicated information: their speed difference, their respective positions with respect to each other, the vector of the speed difference, and the position of each user terminal with respect to their access points.

At steps obtaining 100 position data, the communicated information is part of said position data, and is used at step assessing 150.

As an option, the two articulated bus are stationary.

The invention considers combining the processes in accordance with figures 1 to 12.

It should be understood that the detailed description of specific preferred embodiments is given by way of illustration only, since various changes and modifications within the scope of the invention will be apparent to the person skilled in the art. The scope of protection is defined by the following set of claims.

## Claims

1. Process for detecting a user terminal (UT) in the passenger compartment (8) of an articulated bus (2), the articulated bus (2) comprising at least two units (4) adapted for pivoting with respect to each other, said at least two units (4) comprising a first unit (4F) and a second unit (4S), a passenger compartment (8) extending at least in the first unit (4F) and in the second unit (4S),
the process comprising the step:
obtaining (100) position data of a user terminal (UT), said user terminal (UT) being outside the first unit (4F),
wherein the process further comprises the steps:
computing (102) inclination information of the second unit (4S) with respect to the first unit (4F), wherein the inclination information comprises an inclination angle (α ; β) formed by the units (4) and/or the position of a reference point (RP) of the second unit (4S) with respect to the first unit (4F),
computing (104) the shape of the passenger compartment (8) by using information comprising the inclination information and the known geometry of each unit (4),
wherein said shape comprises at least one of the following: the outline of the passenger compartment (8), the volume of the passenger compartment (8), and the longitudinal central line (LCA) of at least one of the units (4),
assessing (150) whether the user terminal (UT) is inside the second unit (4S), by comparing the position data of the user terminal (UT), and the space covered by the computed shape of the passenger compartment (8).

2. The process in accordance with claim 1, wherein the articulated bus (2) comprises a network (40) with a first access point (42.1), associated with a low power short range wireless protocol, the position data comprises a first distance (D1) between the first access point (42.1) and the user terminal (UT), said first distance (D1) being used during step assessing (150) ; the first access point (42.1) being in the first unit (4F).

3. The process in accordance with claim 2, wherein the network (40) further comprises a second access point (42.2) and a third access point (42.3); the position data comprises a second distance (D2) between the second access point (42.2) and the user terminal (UT), and a third distance (D3) between the third access point and the user terminal (UT); the second access point (42.2) being disposed in the second unit (4S), and the third access point (42.3) being disposed in the first unit (4F).

4. The process in accordance with claim 2, wherein the network (40) further comprises a third access point (42.3), the position data comprises a third distance (D3) between the third access point and the user terminal (UT), the third access point (42.3) being disposed in the first unit (4F).

5. The process in accordance with any of claims 2 to 4, wherein the access points (42.1-42.5) are distributed in the at least two units (4), and the articulated bus (2) is configured such that when the at least two units (4) are aligned, the first, second and third access points (42.1-42.3) define a polygon, or the access points (42.1-42.5) are in the first unit (4F) and define a polygon.

6. The process in accordance with any of claims 2 to 5, wherein the network (40) further comprises a fourth access point (42.4), the position data comprises a fourth distance (D4) between the fourth access point and the user terminal (UT), the fourth access point (42.4) being disposed in the first unit (4F) and define a polyhedral, or the access points (42.1-42.5) are distributed in the units (4) and the access points define a polyhedral when the at least two units (4) are aligned.

7. The process in accordance with any of claims 1 to 6, wherein step obtaining (100) the position data comprises a step access point scan (90) in order to identify access points (42) of a network (40), and a step power comparison (92) of the access points (42) in order to obtain the distances (D1-D5) with respect to the access points (42), each access point of the network comprising a signature.

8. The process in accordance with any of claims 1 to 7, wherein the articulated bus (2) comprises a joint (6) connecting the second unit (4S) to the first unit (4F), the passenger compartment (8) extending through said joint (6), and an access point (42) of the network (40) is disposed in said joint.

9. The process in accordance with any of claims 1 to 8, wherein the process comprises a step geolocation (106) of the articulated bus (2), a step obtaining (108) orientation data of the articulated bus (2), of at least one of the two units (4) ; and step obtaining (100) position data comprises a step geolocation of the user terminal (UT), the position data comprising geolocation data which is used at step assessing (150).

10. The process in accordance with any of claims 1 to 9, wherein the articulated bus (2) is a first articulated bus (2), and a second articulated bus (2) which is similar or identical to the first articulated bus and which comprises a sixth access point is driving at a different speed than the first articulated bus, the first articulated bus and the second articulated bus (2) comprising a speed difference with a direction, during step assessing (150) said direction being used in order to assess whether the user terminal (UT) is inside the passenger compartment (8).

11. Process according with claim 10, wherein the position information is computed with respect to the first unit (4F).

12. A computer program comprising computer readable code means, which when run on a computer (24), cause the computer (24) to run the process according to anyone of claims 1 to 11, the articulated bus (2) is a double deck bus.

13. A computer program product including a computer readable medium (26) on which the computer program according to claim 12 is stored.

14. A computer (24) configured for carrying out the process according to anyone of claims 1 to 11.

15. An articulated bus (2) comprising a user terminal (UT) detection system (30) and a computer (24) in accordance with claim 14; the articulated bus (2) comprising at least three units (4) adapted for pivoting with respect to one another.

## Patentansprüche

1. Verfahren zum Erkennen eines Benutzerterminals (UT) im Fahrgastraum (8) eines Gelenkbusses (2), wobei der Gelenkbus (2) mindestens zwei gegeneinander schwenkbare Einheiten (4) umfasst, wobei die mindestens zwei Einheiten (4) aus einer ersten Einheit (4F) und einer zweiten Einheit (4S) bestehen, wobei sich ein Fahrgastraum (8) zumindest in der ersten Einheit (4F) und in der zweiten Einheit (4S) erstreckt,
worin das Verfahren den Schritt umfasst:
Erhalten (100) von Positionsdaten eines Benutzerterminals (UT), wobei sich das Benutzerterminal (UT) insbesondere außerhalb der ersten Einheit (4F) befindet,
wobei das Verfahren weiterhin die Schritte umfasst:
Berechnen (102) von Neigungsinformationen der zweiten Einheit (4S) in Bezug auf die erste Einheit (4F), wobei die Neigungsinformationen einen durch die Einheiten (4) gebildeten Neigungswinkel (α; β) und/oder die Position von einem Referenzpunkt (RP) der zweiten Einheit (4S) in Bezug auf die erste Einheit (4F) umfassen,
Berechnen (104) der Form des Fahrgastraums (8) unter Verwendung von Informationen, die die Neigungsinformationen und die bekannte Geometrie jeder Einheit (4) umfassen, wobei die Form mindestens eines der Folgenden umfasst: den Umriss des Fahrgastraums (8), das Volumen des Fahrgastraums (8) und die Längsmittellinie (LCA) mindestens einer der Einheiten (4),
Beurteilen (150), ob sich das Benutzerterminal (UT) innerhalb der zweiten Einheit (4S) befindet, durch Vergleichen der Positionsdaten des Benutzerterminals (UT) und des von der berechneten Form des Fahrgastraums (8) abgedeckten Raums.

2. Verfahren nach Anspruch 1, wobei der Gelenkbus (2) ein Netzwerk (40) mit einem ersten Zugangspunkt (42.1) umfasst, der einem Low-Power-Short-Range-Funkprotokoll zugeordnet ist, wobei die Positionsdaten eine erste Entfernung umfassen (D1) zwischen dem ersten Zugangspunkt (42.1) und dem Benutzerterminal (UT), wobei die erste Entfernung (D1) während der Beurteilungsschritt (150) verwendet wird; wobei sich der erste Zugangspunkt (42.1) in der ersten Einheit (4F) befindet.

3. Verfahren nach Anspruch 2, wobei das Netzwerk (40) weiterhin einen zweiten Zugangspunkt (42.2) und einen dritten Zugangspunkt (42.3) umfasst; die Positionsdaten umfassen einen zweiten Abstand (D2) zwischen dem zweiten Zugangspunkt (42.2) und dem Benutzerterminal (UT) und einen dritten Abstand (D3) zwischen dem dritten Zugangspunkt und dem Benutzerterminal (UT); wobei der zweite Zugangspunkt (42.2) in der zweiten Einheit (4S) und der dritte Zugangspunkt (42.3) in der ersten Einheit (4F) angeordnet ist.

4. Verfahren nach Anspruch 2, wobei das Netzwerk (40) weiterhin einen dritten Zugangspunkt (42.3) umfasst, die Positionsdaten einen dritten Abstand (D3) zwischen dem dritten Zugangspunkt und dem Benutzerterminal (UT) umfassen, wobei der dritte Zugangspunkt (42.3) in der ersten Einheit (4F) angeordnet ist.

5. Verfahren nach einem der Ansprüche 2 bis 4, wobei die Zugangspunkte (42.1-42.5) in den mindestens zwei Einheiten (4) verteilt sind und der Gelenkbus (2) so konfiguriert ist, dass wenn die mindestens zwei Einheiten (4) gerade zueinander ausgerichtet sind, der erste, zweite und dritte Zugangspunkt (42.1-42.3) ein Polygon definieren, oder die Zugangspunkte (42.1-42.5) sich in der ersten Einheit (4F) befinden und ein Polygon definieren.

6. Verfahren nach einem der Ansprüche 2 bis 5, wobei das Netzwerk (40) weiterhin einen vierten Zugangspunkt (42.4) umfasst, die Positionsdaten eine vierte Entfernung (D4) zwischen dem vierten Zugangspunkt und dem Benutzerterminal (UT) umfassen, wobei der vierte Zugangspunkt (42.4) in der ersten Einheit (4F) angeordnet ist und ein Polyeder definiert, oder die Zugangspunkte (42.1-42.5) sind in den Einheiten (4) verteilt und die Zugangspunkte definieren ein Polyeder, wenn die mindestens zwei Einheiten (4) gerade zueinander ausgerichtet sind.

7. Verfahren nach einem der Ansprüche 1 bis 6, wobei der Schritt des Erhaltens (100) der Positionsdaten einen Schritt des Zugriffspunktscans (90) umfasst, um Zugangspunkte (42) eines Netzwerks (40) zu identifizieren, und einen Schritt des Leistungsvergleichs (92) der Zugangspunkte (42), um die Abstände (D1-D5) in Bezug auf die Zugangspunkte (42) zu erhalten, wobei jeder Zugangspunkt des Netzwerks eine Signatur umfasst.

8. Verfahren nach einem der Ansprüche 1 bis 7, wobei der Gelenkbus (2) ein die zweite Einheit (4S) mit der ersten Einheit (4F) verbindendes Gelenk (6) aufweist, durch das sich der Fahrgastraum (8) erstreckt, und wobei ein Zugangspunkt (42) des Netzwerks (40) in dem Gelenk angeordnet ist.

9. Verfahren nach einem der Ansprüche 1 bis 8, wobei das Verfahren einen Schritt der Geolokalisierung (106) des Gelenkbusses (2), einen Schritt des Ermittelns (108) von Orientierungsdaten des Gelenkbusses (2), von mindestens einer der beiden Einheiten (4) umfasst; und wobei der Schritt des Erhaltens (100) von Positionsdaten einen Schritt der Geolokalisierung des Benutzerterminals (UT) umfasst, wobei die Positionsdaten Geolokalisierungsdaten umfassen, die im Schritt des Bewertens (150) verwendet werden.

10. Verfahren nach einem der Ansprüche 1 bis 9, wobei der Gelenkbus (2) ein erster Gelenkbus (2) ist und wobei ein zweiter Gelenkbus (2), der dem ersten Gelenkbus ähnlich oder identisch ist und einen sechster Zugangspunkt umfasst, mit einer anderen Geschwindigkeit als der erste Gelenkbus fährt, wobei der erste Gelenkbus und der zweite Gelenkbus (2) einen Geschwindigkeitsunterschied mit einer Richtung aufweisen, wobei im Schritt Bewerten (150) diese Richtung zur Beurteilung herangezogen wird, ob das Benutzerterminal (UT) sich im Fahrgastraum (8) befindet.

11. Verfahren nach Anspruch 10, wobei die Positionsinformationen in Bezug auf die erste Einheit (4F) berechnet werden.

12. Computerprogramm mit computerlesbaren Codemitteln, die, wenn sie auf einem Computer (24) ausgeführt werden, den Computer (24) veranlassen, den Prozess nach einem der Ansprüche 1 bis 11 auszuführen, wobei der Gelenkbus (2) ein Doppeldeckerbus ist Bus.

13. Computerprogrammprodukt mit einem computerlesbaren Medium (26), auf dem das Computerprogramm nach Anspruch 12 gespeichert ist.

14. Ein Computer (24), der zur Durchführung des Verfahrens nach einem der Ansprüche 1 bis 11 konfiguriert ist.

15. Ein Gelenkbus (2), der ein Benutzerterminal (UT)-Erkennungssystem (30) und einen Computer (24) gemäß Anspruch 14 umfasst; wobei der Gelenkbus (2) mindestens drei gegeneinander schwenkbare Einheiten (4) umfasst.

## Revendications

1. Procédé de détection d'un terminal utilisateur (UT) dans l'habitacle (8) d'un bus articulé (2), le bus articulé (2) comprenant au moins deux unités (4) adaptées pour pivoter l'une par rapport à l'autre, lesdites au moins deux unités (4) comprenant une première unité (4F) et une deuxième unité (4S), un habitacle (8) s'étendant au moins dans la première unité (4F) et dans la deuxième unité (4S),
le procédé comprenant l'étape :
obtenir (100) des données de position d'un terminal utilisateur (UT), ledit terminal utilisateur (UT) étant notamment extérieur à la première unité (4F),
dans lequel le processus comprend en outre les étapes :
calculer (102) des informations d'inclinaison de la deuxième unité (4S) par rapport à la première unité (4F), les informations d'inclinaison comprenant un angle d'inclinaison (α ; β) formé par les unités (4) et/ou la position d'un point de référence (RP) de la deuxième unité (4S) par rapport à la première unité (4F),
calculer (104) la forme de l'habitacle (8) à l'aide d'informations comprenant les informations d'inclinaison et la géométrie connue de chaque unité (4), ladite forme comprenant au moins l'un des éléments suivants : le contour de l'habitacle (8) ), le volume de l'habitacle (8), et la ligne médiane longitudinale (LCA) d'au moins une des unités (4),
évaluer (150) si le terminal utilisateur (UT) se trouve à l'intérieur de la seconde unité (4S), en comparant les données de position du terminal utilisateur (UT) et l'espace couvert par la forme calculée de l'habitacle (8).

2. Procédé selon la revendication 1, dans lequel le bus articulé (2) comprend un réseau (40) avec un premier point d'accès (42.1), associé à un protocole sans fil courte portée de faible puissance, les données de position comprenant une première distance (D1) entre le premier point d'accès (42.1) et le terminal utilisateur (UT), ladite première distance (D1) étant utilisée lors de l'étape d'évaluation (150) ; le premier point d'accès (42.1) se trouvant dans la première unité (4F).

3. Procédé selon la revendication 2, dans lequel le réseau (40) comprend en outre un deuxième point d'accès (42.2) et un troisième point d'accès (42.3) ; les données de position comprennent une deuxième distance (D2) entre le deuxième point d'accès (42.2) et le terminal utilisateur (UT), et une troisième distance (D3) entre le troisième point d'accès et le terminal utilisateur (UT) ; le deuxième point d'accès (42.2) étant disposé dans la deuxième unité (4S), et le troisième point d'accès (42.3) étant disposé dans la première unité (4F).

4. Procédé selon la revendication 2, dans lequel le réseau (40) comprend en outre un troisième point d'accès (42.3), les données de position comprennent une troisième distance (D3) entre le troisième point d'accès et le terminal utilisateur (UT), le troisième point d'accès (42.3) étant disposé dans la première unité (4F).

5. Procédé selon l'une quelconque des revendications 2 à 4, dans lequel les points d'accès (42.1 à 42.5) sont répartis dans les au moins deux unités (4), et le bus articulé (2) est configuré de telle sorte que lorsque l'au moins deux unités (4) sont alignées, les premier, deuxième et troisième points d'accès (42.1 à 42.3) définissent un polygone, ou les points d'accès (42.1 à 42.5) sont dans la première unité (4F) et définissent un polygone.

6. Procédé selon l'une quelconque des revendications 2 à 5, dans lequel le réseau (40) comprend en outre un quatrième point d'accès (42.4), les données de position comprennent une quatrième distance (D4) entre le quatrième point d'accès et le terminal utilisateur (D4). UT), le quatrième point d'accès (42.4) étant disposé dans la première unité (4F) et définit un polyèdre, ou bien les points d'accès (42.1-42.5) sont répartis dans les unités (4) et les points d'accès définissent un polyèdre lorsque les au moins deux unités (4) sont alignées.

7. Procédé selon l'une quelconque des revendications 1 à 6, dans lequel l'étape d'obtention (100) des données de position comprend une étape de balayage des points d'accès (90) afin d'identifier les points d'accès (42) d'un réseau (40), et un étape de comparaison de puissance (92) des points d'accès (42) afin d'obtenir les distances (D1-D5) par rapport aux points d'accès (42), chaque point d'accès du réseau comprenant une signature.

8. Procédé selon l'une quelconque des revendications 1 à 7, dans lequel l'autobus articulé (2) comprend une articulation (6) reliant la deuxième unité (4S) à la première unité (4F), l'habitacle (8) s'étendant à travers ledit joint (6), et un point d'accès (42) du réseau (40) est disposé dans ledit joint.

9. Procédé selon l'une quelconque des revendications 1 à 8, **caractérisé en ce qu'**il comprend une étape de géolocalisation (106) du bus articulé (2), une étape d'obtention (108) de données d'orientation du bus articulé (2), d'au au moins une des deux unités (4) ; et l'étape d'obtention (100) de données de position comprend une étape de géolocalisation du terminal utilisateur (UT), les données de position comprenant des données de géolocalisation qui sont utilisées lors de l'étape d'évaluation (150).

10. Procédé selon l'une quelconque des revendications 1 à 9, dans lequel l'autobus articulé (2) est un premier autobus articulé (2), et un deuxième autobus articulé (2) qui est similaire ou identique au premier autobus articulé et qui comprend un sixième point d'accès roule à une vitesse différente de celle du premier bus articulé, le premier bus articulé et le deuxième bus articulé (2) comprenant une différence de vitesse avec une direction, lors de l'étape d'évaluation (150) ladite direction étant utilisée afin d'évaluer si le terminal utilisateur (UT) se trouve à l'intérieur de l'habitacle (8).

11. Procédé selon la revendication 10, dans lequel les informations de position sont calculées par rapport à la première unité (4F).

12. Programme informatique comprenant un moyen de code lisible par ordinateur qui, lorsqu'il est exécuté sur un ordinateur (24), amène l'ordinateur (24) à exécuter le processus selon l'une quelconque des revendications 1 à 11, le bus articulé (2) est un bus à deux étages.

13. Produit programme informatique comprenant un support lisible par ordinateur (26) sur lequel le programme informatique selon la revendication 12 est stocké.

14. Ordinateur (24) configuré pour exécuter le processus selon l'une quelconque des revendications 1 à 11.

15. Bus articulé (2) comprenant un système de détection de terminal utilisateur (UT) (30) et un ordinateur (24) selon la revendication 14 ; le bus articulé (2) comprenant au moins trois unités (4) adaptées pour pivoter les unes par rapport aux autres.
